Europäisches Patentamt

European Patent Office

Office européen des brevets

(19)

(11) **EP 1 562 332 A1**

(12) **EUROPEAN PATENT APPLICATION**

(43) Date of publication:
**10.08.2005 Bulletin 2005/32**

(51) Int Cl.⁷: **H04L 12/56**, B60R 16/02

(21) Application number: **04425067.8**

(22) Date of filing: **06.02.2004**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK** | • **Coletti, Luca**<br>**32044 Piave di Cadore (BL) (IT)**<br>• **Riato, Nicola**<br>**20040 Caponago (MOI) (IT)** |
| (71) Applicant: **Siemens Mobile Communications**<br>**S.p.A.**<br>**20126 Milano (IT)** | (74) Representative: **Giustini, Delio**<br>**Siemens Mobile Communications S.p.A.**<br>**Postfach 22 16 34**<br>**80506 München (DE)** |
| (72) Inventors:<br>• **Campelli, Luca**<br>**20131 Milano (IT)** | |

(54) **Mapping adhoc MAC protocol layer onto existing formats of the slotted channel**

(57)    A method is described to determine the optimum mapping of the ADHOC MAC protocol layer over UMTS Terrestrial Radio Access UTRA TDD LCR, opportunely adapted. ADHOC MAC is based on the RR-ALOHA algorithm which was designed for managing network resources without centralized reference or stations acting as a master. Typically such networks are defined as ad-hoc networks and find applications for inter-vehicle communications, as foreseen in CarTALK 2000 project. Among current standards, other physical layers that can support ADHOC MAC are, for example: IEEE 802.11 WLAN, e.g WiFi, Hiperlan/2, and UTRA TDD HCR. The mapping procedure takes into considerations: physical layer constraints, station density, size of application messages and one-hop, multi-hop transmission delay. An event driven simulator in language C++ has been designed to evaluate the mapping method. According to the method, a point of work of 0.45 is selected at first by estimating the fraction of busy time slots versus offered traffic within the coverage area of the stations. It is assumed that the optimal point of work is kept constant by an autonomous power control from the stations. Then the delay between transmission and reception of an application message versus the distance from the source is estimated at the point of work for possible combinations of MAC frame durations and the relevant number N of time slots, said durations being multiple of the frame duration of the selected TDMA format. The combination indicating the maximum distance in correspondence of a fixed multi-hop delay of 1 second, namely in the order of the human time of reaction at the warning stimulus transmitted with CarTALK messages, is selected as optimum mapping (fig.19).

FIG. 19

**EP 1 562 332 A1**

**Description**

**FIELD OF THE INVENTION**

The present invention relates to the field of the ad hoc networks for inter-vehicle communication, and more precisely to a method to achieve optimum mapping of ADHOC MAC (Medium Access Control) protocol layer on the existing formats of the slotted channel. According to the preamble of claim 1, the ADHOC MAC is based on the RR-ALOHA algorithm disclosed in the Italian patent application cited at Ref.[1], being the RR-ALOHA (Reliable R-ALOHA) an evolution for ad hoc networks of the known R-ALOHA (Reserved ALOHA) disclosed in Ref.[2].

**BACKGROUND ART**

Ad hoc networks represent a new concept of wireless architecture with respect to the classical cellular networks. Ad hoc networks are currently a hot research topic in the communications field and are deemed to be a key innovative issue in future mobile wireless networks. An ad hoc network is a distributed multi-hop wireless network. As a result of such definition, the following main characteristics of ad hoc networks can be outlined:

- No infrastructure: there exists no need for an infrastructure and operation is established in a self-organizing manner;
- No administration: administration of an ad hoc network is done in an autonomous fashion by each station (terminal) and, hence, no costs are needed for maintenance;
- Distributed: network control and database functions are distributed over all stations or a dedicated subset;
- Multi-hop: end-to-end paths using multiple stations as relay stations can be established to provide a connection between two distinct nodes;
- Wireless: the stations use a wireless interface to communicate with each other;
- Mobile: the network may consist of mobile stations only (i.e. without base stations).

Ad hoc networks can be described as self-creating, self-organizing and self-administering, conducting the paradigm of networking any time, anywhere. A new frontier of ad hoc networking is inter-vehicles communication. An ad hoc network for vehicle-to-vehicle communication is a fast moving, outdoor mobile ad hoc network having the following additional features:

- Large and variable number of a homogeneous type of stations;
- Mobile stations can move at high speed;
- Extremely high dynamic network topologies;
- No power consumption limitation;
- Minimum delay guaranteed for emergency calls

Ad hoc networks are likely to be introduced as complementary and integrated with classical cellular networks rather then in substitution of the latter network architecture.

Car traffic is one of the most prominent features of modern civilisation. In average we spend a considerable time of our daily life in cars commuting from home to work. Today's vehicles are equipped with a multitude of passive safety systems (e.g. airbag, belt pretensioner) that can ensure the survival of the driver in car accidents. Nevertheless, with increasing traffic density on highways and inside the cities, the traffic situations become more and more complex and dangerous for today's drivers. One of the most important objectives set by the European Commission is the reduction of 50% in road accidents within 2010, by promoting an integrated safety. Since future safety requirements cannot be fulfilled by systems that provide only passive safety, Intelligent Transportation Systems (ITS) have been proposed with the aim of using advanced technology to improve safety and efficiency of transportation systems.

In most of the cases, accidents, congestions and other associated problems are the outcome of the driver's inability to assess complex traffic situations correctly and instantly. Human visual attention is very limited and the driver has only a partial knowledge about the exact position and velocity of surrounding vehicles.

Within this approach, the development of intra- and inter-vehicle communications for Intelligent Transport System (ITS) has attracted major attention during the last few years. Especially, car manufactures are interested in the development of ad hoc networks, which are able to provide car-to-car communication with minimum delay for time critical safety relevant messages such as emergency and warning messages, even at high velocity. Typical applications range from emergency notifications in case of accidents and the distribution of Decentralized Floating Car Data for a Self-Organizing Traffic Information System, Ref.[3], to more advanced applications like co-operative driving. For these applications, time and safety requirements cannot be fulfilled by existing air-interfaces relying on a centralized cellular network structure (e.g. GSM) while a dedicated distributed wireless network (ad hoc network) would represent the ideal solution. Furthermore, by using ad hoc wireless communication, typical Internet applications like web browsing, e-mail or chat applications can be provided, too.

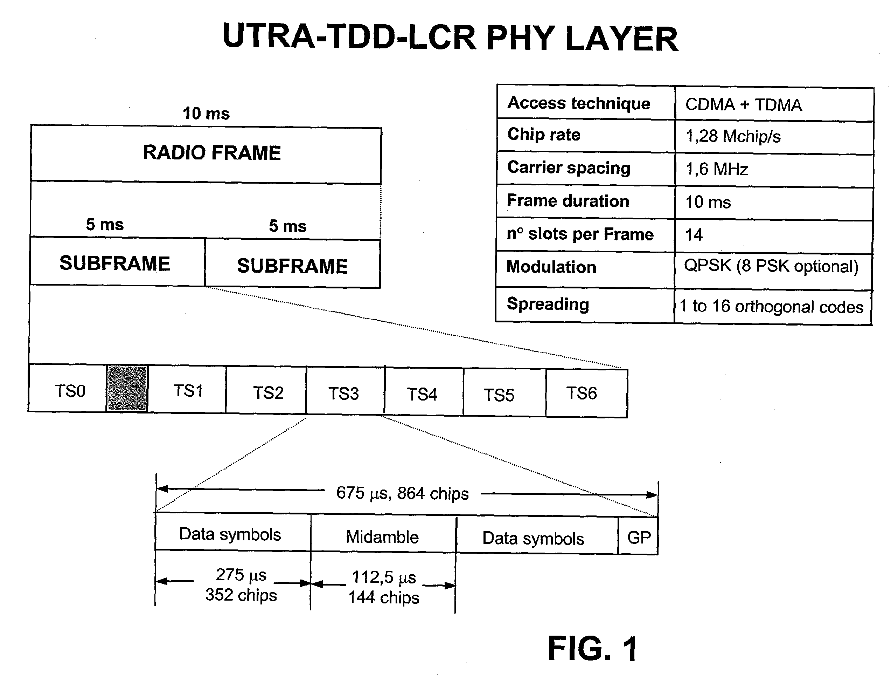

The Applicant is involved in the CarTALK 2000 project (http://www.cartalk2000.net) that started in August 2001 as three-years project funded within the IST Cluster of the 5th Framework Program of the European Commission. From the radio communication point of view, the goals of these projects are the development of an ad hoc wireless networks for inter-vehicle (and vehicle-to-infrastructure communications). The philosophy of CarTALK 2000 is that the new communication system should be based on an existing air-interface capable of supporting the ad hoc mode with as few modifications as possible in order to minimise costs and to benefit from mass market. A lot of research activity, with the production of numerous reports and papers, has already been carried out by the aforementioned research project in order to establish the most suited technology and to evaluate modifications required. The already available radio interface identified as most suited for support of ad hoc communication with minimum modifications is the UTRA TDD LCR (UMTS Terrestrial Radio Access Time Division Duplex Low Chip Rate) air-interface, whose CDMA-TDMA (Code Division Multiple Access — Time Division Multiple Access) physical layer (PHY)) is depicted in **fig.1**. UTRA TDD LCR or TD-SCDMA has been adopted as target communication system in the CarTALK 2000 project. The arguments for using TD-SCDMA as ad hoc communication target system are:

- For UMTS a frequency range of 2010 to 2020 MHz is reserved, which is allocated as a license-free band for UTRA TDD mode;
- Looking at the evolution of UMTS, it is furthermore expected that low cost components will be available;
- TD-SCDMA offers high flexibility with respect to asymmetric data flows, it is extremely well-suited for packet data transfer and for tomorrow's IP traffic;
- It supports high speed mobility, sufficient user bit rates, quality of service (QoS);
- It is appropriate for operation in an ad hoc network and it allows communication over large distances and operation in an multipath environment.

CarTALK 2000 groups Applications/Services as: 1) Vehicles Driving Assistance, 2) Advertisement and Entertainment.

1) Vehicles Driving Assistance has the purpose to improve vehicles safety. In particular three application subgroups have been defined, namely: Information and Warning Functions (IWF), Communication-Based Longitudinal Control (CBLC), Co-operative Driver Assistance (CODA).

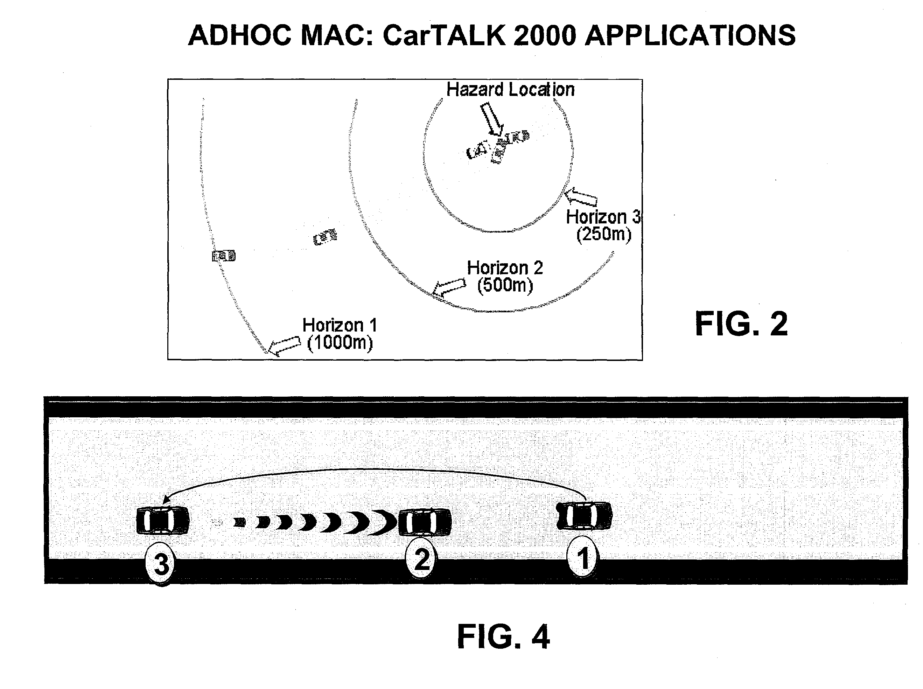

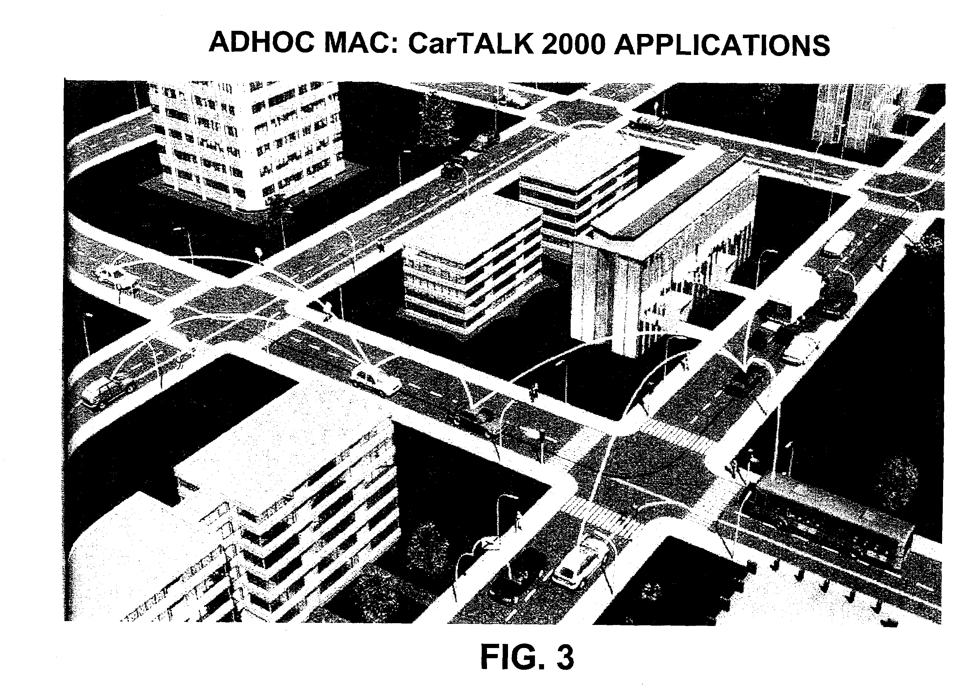

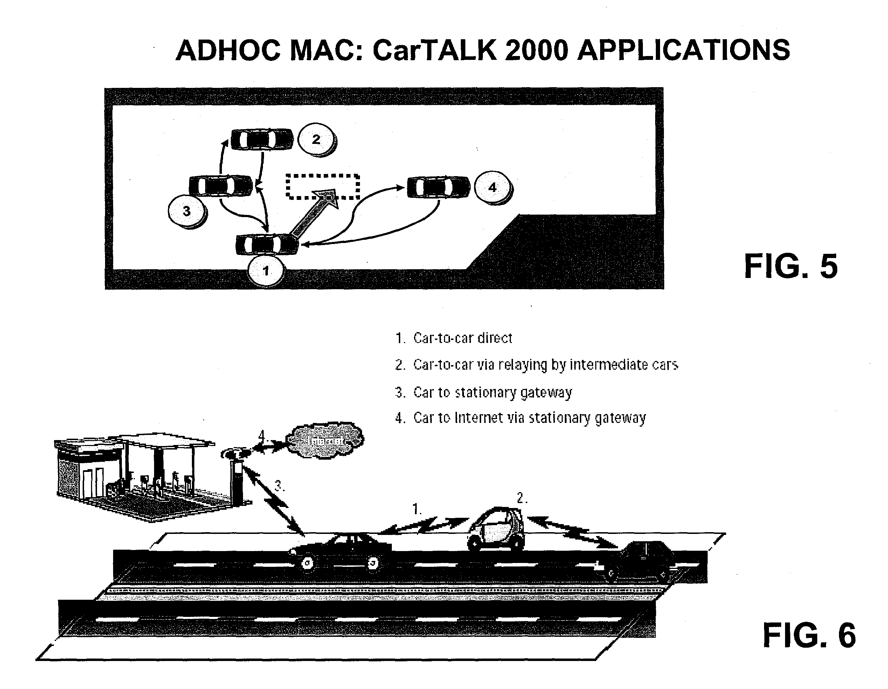

- IWF informs and warns the driver in case of a critical situation (e.g. accident ahead, car break down, congestion, road condition monitoring and extended blind spot like merging manoeuvres). For example, with reference to **fig.2**, if the ABS starts because of a slippery street, the system automatically sends a message to the cars around in order to inform them of the danger; or with reference to **fig.3,** if the cars are stopped due at congestion situation the navigator find the anomalous situation and it communicates it to the navigators of the cars in arrival, that it will suggest an alternative path.
- CBLC warns the driver with longitudinal control of the vehicle. For example, with reference to **fig.4,** stop and go traffic, advanced distance keeping, anticipated driving, early braking and advanced flow control and throughput).
- CODA promotes co-operation scenarios with driver guidance. For example, with reference to **fig.5**, merging on highway ramps, merging two lanes to one, crossover merging, overtaking and lane changing and intersection assistance.

2) Advertisement and Entertainment (centralized and decentralized) makes provision of homonym services. Such services have lower priority and should not interfere with the provision of Vehicle Driving Assistance services and undermine car driving safety. In particular such services should not cause loss of attention by the vehicle driver. So, in addition to the design of a suitable communication system, the human-machine interface has a very important role, too, and the car manufactures are strongly involved in the definition of such interface. Such applications can be:

- Interactive games, especially between young passengers;
- Exchange of text or voice messages between cars;
- Information push services, such as commercial announcements from gas stations (e.g. about fuel prices and offered services), restaurants, shops or hotels along the road;
- Booking services, e.g. as user reaction to the information push services mentioned in the previous bullet.

Optionally, access to the Internet can be offered by fixed gateways along the road, which can be financed by e.g. the commercial information push services mentioned above. This kind of marketing along the road motivates the service providers to install gateways and, at the same time, provide the infrastructure for an access to the Internet as depicted in **fig.6**.

With reference to the preceding **figures 2** to **6,** a typical scenario is the following:

- You are driving at 180 km per hour on a motor way and you are notified about an accident behind the next bend.
- You approach a traffic jam and you can ask for the traffic flow conditions ahead to find out whether you should use an alternative route or not.
- Your children can make friends with children in cars close to yours by chatting or playing interactive games.

When the car is stopped (e.g. gasoline station) where the 3G cellular coverage is available, the user can switch the communication system from the ad hoc/distributed functioning mode to the cellular/centralized mode in order to use typical 3G services available in the classical mobile networks. The switching modality between ad hoc and cellular operating modes would result in the exclusion of the driver assistance services if the cellular mode is used while the vehicle is in movement. This drawback can be removed by installing a double mode (ad hoc/cellular) terminal in the vehicle. Car manufactures (e.g. DaimlerChrysler, Fiat, BMW, VW, etc.) are actively looking for a communication technology which can satisfy all Vehicles Driving Assistance application requirements and it can be expected that such communication system will become standard equipment in all future vehicles. They are potentially extremely interested in UTRA TDD based inter-vehicle communication system, as demonstrated by the participation to CarTALK 2000 project, because of the superior performances assured by this technology.

If the application messages have to be inserted directly into the MAC layer without any block in between, the information about the size and delay required of the applications messages are crucial for the selection of the optimum mapping. The delay could be one-hop and/or multi-hop, their meaning will be cleared afterwards. Any mapping algorithm should take into consideration these values with the input parameters: $MSG_{SIZE}$ [bits] (Message Size), $D_{MSG-OH}$ [s] (Delay One-Hop) and $D_{MSG-MH}$ [s] (Delay Multi-Hop). If an ad hoc network has to be designed only for internet applications (without specific applications), the channel bit rate at MAC layer that can guarantee the expected bitrate shall be taken into consideration. The bitrate at MAC layer is influenced by the physical layer velocity of the channel, number N of time slots per frame, and $MSDU_{SIZE}$.

In CarTALK 2000, an estimation of the number of bits needed for each application is given. These values are provided considering the information that every car has to send, when an event occurs. As said above, the applications are the following ones:

1. Information and Warning Functions (IWF):

- Basic Warning (IWF1)
- Extended Blind Spot (IWF2)
- Intersection Warning (IWF3)

2. Communications-Based Longitudinal Control (CBLC):

- Stop & Go (CBLC1)
- Early Braking (CBLC2)

3. Co-Operative Driver Assistance (CODA):

- Basic Merging

These three clusters have different properties, offer various services in order to improve the driving conditions and to increase comfort and safety of passengers. Every application demands particular requirements (e.g. type of vehicle, geographic position, low delays of transmission, high reliability, etc.). The information that vehicles must exchange has been identified in terms of signals type and related requirements.

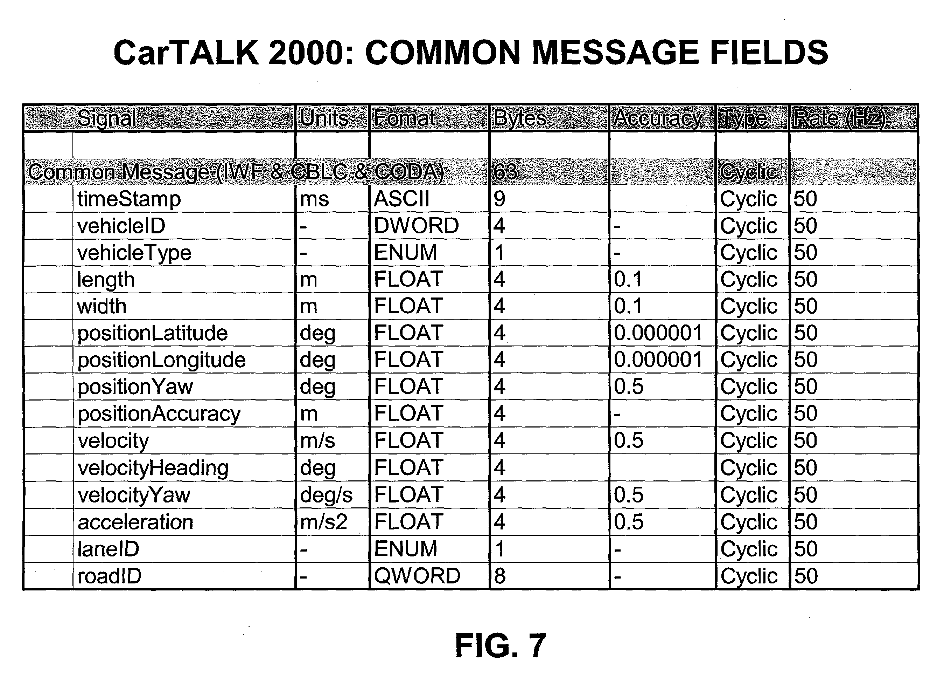

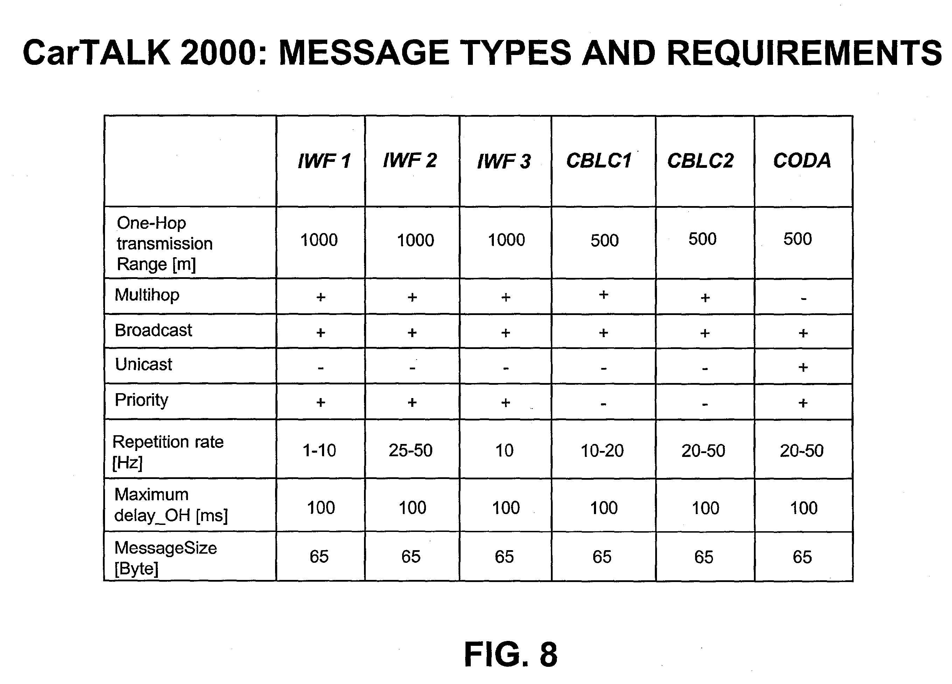

As shown in the table of **fig.7**, an unique message, containing all needed signals and common to all the demo applications, has been specified in previous CT deliverables. Hence, in considered applications, 63 bytes are need for common messages. Two additional bytes for the specific signals of the applications are been taken in consideration. Communication requirements with an estimation of size of application messages is provided and summarized in the table of **fig.8**.

Therefore, in order to find the optimum mapping in CarTALK 2000 project, we will use the following input parameters: size of application messages: $MSG_{SIZE}$ = 65 Byte = 520 bits, and application messages one-hop delay required: $D_{MSG-OH}$ = 100 ms. We don't have specified requirements about multi-hop delay, but, considering the applications, we want it as less as possible.

The RR-ALOHA algorithm at Ref.[1] implements an ADHOC-MAC protocol skilled enough to solve the problems known in the literature as the "hidden station" and the "exposed station", due to the partial overlapping of the network segments (clusters). The ADHOC-MAC operates in a time slotted channel in a distributed environment, synchronized by GPS or equivalent techniques still under consideration. It is devised for an environment in which stations can be grouped into clusters in such a way that all the stations of a cluster are interconnected by broadcast radio communications. Such a cluster is defined as One-Hop (OH), and it is assumed that the stations belonging to different clusters cannot communicate with each other at the physical layer. Note that the stations can belong to more than one OH-cluster, leading to the case of non disjoint clusters. The union of OH-clusters having a common subset is called a Two-Hop (TH) cluster because the stations of the intersection set can be used to relay transmissions inside the union set. The cluster dimensions depending on the transmission power of the various stations, which is self-regulated at MAC layer by the station itself. The access mechanism of ADHOC-MAC can be classified as dynamic TDMA because channels are captured by the stations and kept reserved according to station needs. In absence of a centralized node to manage the band reservation, the ADHOC-MAC uses a large overhead to inform each station on the status of the various slots of the frame. With RR-ALOHA each station in order to become active must acquire a slot in the frame of N slots, referred in the sequel as the "Basic Channel" (BCH). This channel must be correctly heard by all the stations within the same OH-cluster and is used to transmit the Frame Information (FI). Thanks to BCH each station reserves a transmit capacity, permanently, resulting in a circuit-switched broadcast connection that is primarily used for signalling purposes, but even to transmit payload information in the remaining room. The ADHOC-MAC consists of some rules each station must respect in order to perform: basic band reservation, additional band reservation, point-to-point (PTP) transmissions, and multi-hop broadcast service. For these aims, the FI transmitted by each station which owns a slot must specify the value of one, or more, the following fields for each timeslot of the N-slot frame:

- The slot status, either BUSY or FREE (1 bit);
- The source temporary identifier (ID) that serves to identify the station that has successfully captured the slot. The ID is selected at a random and change if already in use. The dimension of the ID depends on the cluster sizes (8 bits) are assumed;
- a priority field (2 bit);
- a PTP service flag (1 bit);

for a maximum of 12xN bits. The remaining part of the slot can be left free or more advantageously accommodate user generated signalling or payload (e.g.: CarTALK 2000, IP packets). For completeness, the RR-ALOHA rules are reported thereafter. In the operation, based on received FIs, each station marks a slot as RESERVED or AVAILABLE according to

**Rule 1**: the next slot, say slot k, is labelled as RESERVED if slot k—N is coded as BUSY in at least one FIs received in the slots from k—N to k—1; otherwise it is labelled as AVAILABLE.

An AVAILABLE slot can be used for new access attempts, namely the transmission of the PSDU (PHY Service Data Unit).

**Rule 2:** the transmission is successful if the slot is coded as "BUSY by station j" in all the received FIs; otherwise the transmission has failed.

The observance of these rules achieves the goal of setting up channels with no interference if the cluster configuration does not change. In this case the slots can be reused in contiguous clusters. However, when the clusters merge because of station migration or activation, transmission collision in established channels can still occur. The continuous checking of Rule 2 by transmitting stations makes colliding stations become aware of any collision. When a collision is discovered, the slot is released and a new set up procedure is started. If the bandwidth provided by BCH is not enough to accommodate the user applications, additional bandwidth can be obtained by assigning those slots not yet reserved. For this aim the station can use the above rules plus a priority information taking care of different QoS requirements. The procedure described provides, and guarantees, a reliable broadcast channel within an OH cluster. If the application requires a point-to-point channel in order to activate the so-called parallel transmissions, the procedure can be modified to increase the overall bandwidth efficiency by exploiting, when possible, slot reuse in adjacent OH-clusters (which could merge to each other). To avoid collisions at the interested receiver when the channel are activated one at a time, the PTP flag is managed according to:

**Rule 3**: a station sets a PTP flag in the FI if the received packet is a broadcast packet or if it is destined to the station itself.

To set up a point-to-point channel use can be made of both AVAILABLE slots and the RESERVED ones according to:

**Rule 4**: a RESERVED slot can be accessed if:

> i) the PTP flag signalled in all the received Fls is off and
> ii) the FI received from the destination station signals the slot as FREE.

If several access attempts occur concurrently, collisions can still occur, and the transmitting station must then perform a further check, according to:

> **Rule 5:** the transmission is successful if the slot is coded as BUSY in the FI of the destination station; otherwise transmission has failed.

So far we have considered broadcast and point to-point transmissions among stations in the same OH-cluster. Let us now extend the ADHOC-MAC operation to a broadcast service over the whole network. This is referred to as the multi-hop broadcast service, since in the ad hoc network environment "some" stations (not all stations as in the "flooding" procedure) are required to relay the broadcast packets to enable them to reach all the stations. The broadcast packets in the ADHOC-MAC network need to be numbered, and the relying procedure is applied only once, the first time the broadcast packet is received by a station. Let $C_i$ the be the set of neighbours of $i$, i.e. all the stations in the same OH-cluster, and $C_j$, for any $j \in C_i$, the set of neighbours of the $i$ neighbours. Given that station $i$ receives a broadcast packet from station z in slot $k$, we define the set of neighbours that have not received the packet in slot $k$ by $S_i$ ($\subseteq C_i$). All these sets are identified by station $i$ through the information carried by the Fls received in the $N$ slots following slot $k$. In fact, set $C_i$ contains all the stations from which station $i$ has received FI, the set $C_j$ for each $j \in C_i$, is identified by the entries in the Fls received by station $j$. The set $S_i$ includes only those neighbours that have not marked slot $k$ as BUSY by station z. At slot $k + N$, station $i$ will recognize whether or not it needs to relay the broadcast packets according to:

> **Rule 6:** station $i$ does not relay the packet if $S_i = 0$ or if, for at least one $j \in (C_i - S_i)$, the following condition is satisfied:

$$S_i \subseteq C_i \text{ AND } (|C_j| > |C_i| \text{ OR } (C_j| = |C_i| \text{ AND } ID_j > ID_i))$$

where $ID_i$ denotes the address of station $i$. Basically, station $i$ does not relay the packet if its set $S_i$ is a subset of $C_j$ and if either $C_j$ has higher cardinality than $C_i$ or, having the same cardinality, the address of $j$ is higher than the address of $i$. According to Rule 6 only selected stations will relay the broadcast packets, thus significantly reducing in suboptimum way the number of retransmissions with respect to flooding.

A goal of CarTALK 2000 is to prevent hardware modifications or/and to limit the modifications of the standard specifications as much as possible. Some modifications are in any case needed to convert from a centralized MAC of the original UTRA TDD LCR to the ADHOC MAC of an UTRA adapted to an inter-vehicle network. For example, this latter UTRA has not uplink and downlink transmissions because of the lack of a centralized BTS. For the same reasons time synchronization and power control are more problematic. Without a precise reference for power control the so called "near far" problem cannot be solved so satisfactorily to allow the detection of the CDMA bursts in a reliable way. A solution that gives the possibility to overcome the power impairment problem and considers also the constraints posed by synchronization, is to allow each station to transmit in separated time slots. In this case, different users transmit over time intervals kept distinct by means of synchronization. Different and varying distances are not more a problem once the signal is received with a sufficient power level. Finally, this approach grants the simplicity of the communication system. With this approach, the decision on the actual transmission power to be used by each station is determined by the station itself with the constraint to cover a limited area with maximum 1 km radius. This constraint implies that each car communicates within a cluster of cars comprised inside a communication range. The power control should influence the communication radius both for minimizing interference to vehicles outside the range of interest (cluster size) and to grant reliable connections inside the cluster regarding fading impairments. Furthermore an extension / reduction of the cluster could be dynamically determined at the MAC layer through a valuation of the congestion level. In case of a high congestion situation, the cluster should be reduced, while at a low traffic level, the cluster can be made larger.

### OUTLINED TECHNICAL PROBLEM

Since the ADHOC-MAC (Ref.[1]) uses a slotted channel, it can be adapted to operate on the physical layer of different standards, including the IEEE 802.11 WLAN, Hiperlan/2, and the UMTS Terrestrial Radio Access TDD (UTRA TDD) selected as target system in CarTALK 2000 project. Unfortunately, there are not relevant suggestions in Ref.[1] neither in technical literature of how adapting the messages of a ADHOC MAC on the physical layer constraints of the selected standard, taking into considerations the real requirements of the implementing system (CarTALK 2000), like: station density, size of application messages, transmission delay, bit rate, etc.

## OBJECT OF THE INVENTION

As a consequence the main object of the present invention is that to indicate a method to achieve optimum mapping of the ADHOC MAC protocol (Ref[1]) for inter-vehicle communications on pre-existent formats of the slotted channel. This object aiming to the best performance in term of delay and bit rate in order to satisfy the applications of the CarTALK 2000 project on the UTRA TDD LCR standard, selected as target system. Without limitation, best performances are aimed with different standards, e.g.: the aforementioned ones, and/or with different values of input parameters, like size of application messages, delay, etc.

## SUMMARY AND ADVANTAGES OF THE INVENTION

The invention achieves said object by providing a method for mapping onto TDMA physical layer of existing formats the ADHOC MAC protocol layer, as disclosed in the claims. ADHOC MAC is based on the RR-ALOHA algorithm which was designed for managing network resources without centralized reference or stations acting as a master. The mapping procedure takes into considerations: physical layer constraints, station density, size of application messages and one-hop, multi-hop transmission delay. According to the method of the invention, a point of work of 0.45 is selected at first by estimating the fraction of busy time slots versus offered traffic within the coverage area of the stations. It is assumed that the optimal point of work is kept constant by an autonomous power control from the stations. Then the delay between transmission and reception of an application message versus the distance from the source is estimated, at the point of work, for possible combinations of MAC frame durations and the relevant number N of time slots, said durations being multiple of the frame duration of the selected physical layer. The combination indicating the maximum distance in correspondence of a fixed multi-hop delay of 1 second, namely in the order of the human time of reaction at the warning stimulus transmitted with the messages, is selected as optimum mapping. aa
The application of the invention is foreseen in CarTALK 2000 project. The selected physical layer is the one of the UMTS Terrestrial Radio Access UTRA TDD LCR, opportunely adapted. Among current standards, other physical layers that can support ADHOC MAC are, for example: IEEE 802.11 WLAN, e.g WiFi, Hiperlan/2, and UTRA TDD HCR. The optimum mapping of the present invention is advantageously usable everywhere in the wireless ad hoc network to the purpose of support: voice and data communication, high priority services in order to improve vehicles safety, road traffic telematics and entertainment services.

## BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:

— **fig.1** shows a representation of the PHY layer of the UTRA TDD LCR standard;
— **figures 2-6** show some possible CarTALK 2000 scenarios manageable according to the mapping method of the present invention;
— **fig.7** is a Table including the fields of a common signalling message foreseen in CarTALK 2000 project;
— **fig.8** is a Table including the message types and requirements for CarTALK 2000 project;
— **fig.9** shows a representation of a possible adaptation of the PHY layer of UTRA TDD LCR to meet the requirements of the ADHOC MAC protocol;
— **fig.10** shows a functional block diagram of a simulator of the operation of the ADHOC MAC protocol;
— **figures 11-18** show some diagrams helpful to determine the optimum mapping of ADHOC MAC layer on the UTRA TDD LCR physical layer, as obtained by the simulator of fig.5;

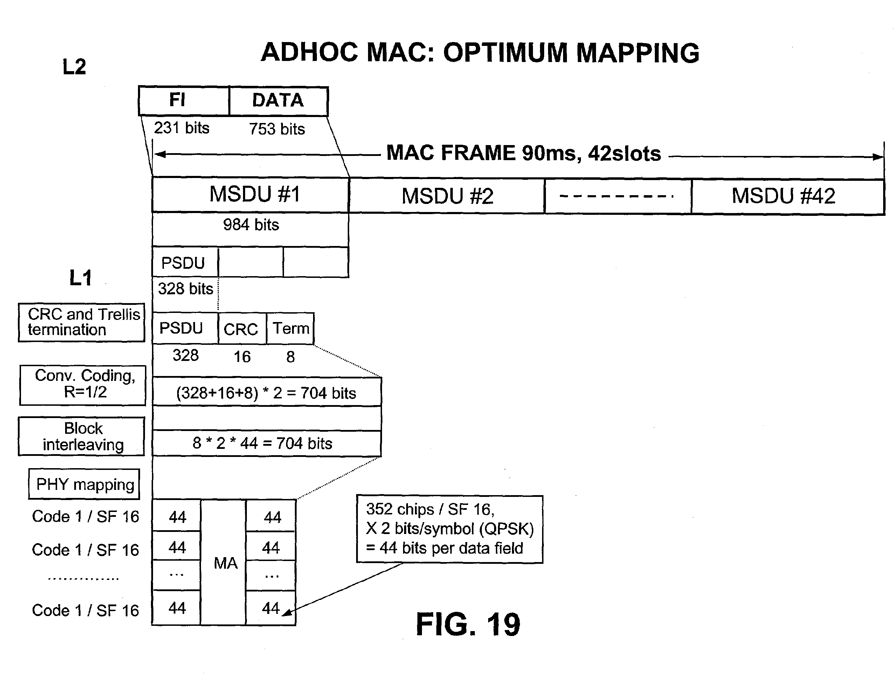

— **fig.19** shows the optimum mapping determined according to the method of the present invention.

## DETAILED DESCRIPTION OF AN EMBODIMENT OF THE INVENTION

As mentioned many times, the philosophy of CarTALK 2000 is that the new communication system should be based on an existing air-interface capable of supporting the ad hoc mode with as few modifications as possible, in order to minimise costs and to benefit from mass market. So in order to prevent hardware modifications as much as possible, the existing physical layer of UTRA TDD LCR of **fig.1** is used. If in different projects or designs we would like to use the same philosophy of CarTALK 2000, we have to select an existing standard. In any case, if we want to adapt the ADHOC MAC on an existing air-interface we have to take in consideration the physical layer constraints. In a physical layer with a slotted channel, other the aforementioned constraints on synchronization and power control, the main constraints are the PHY Service Data Unit size (**PSDU$_{SIZE}$** in bits) and the speed of the transmissions on the channel (bitrate in bits/s). The velocity of the channel can be expressed through the length of PSDU in term of seconds. Additional physical layer constraints could be taken in consideration but it depends on the specific standard selected.

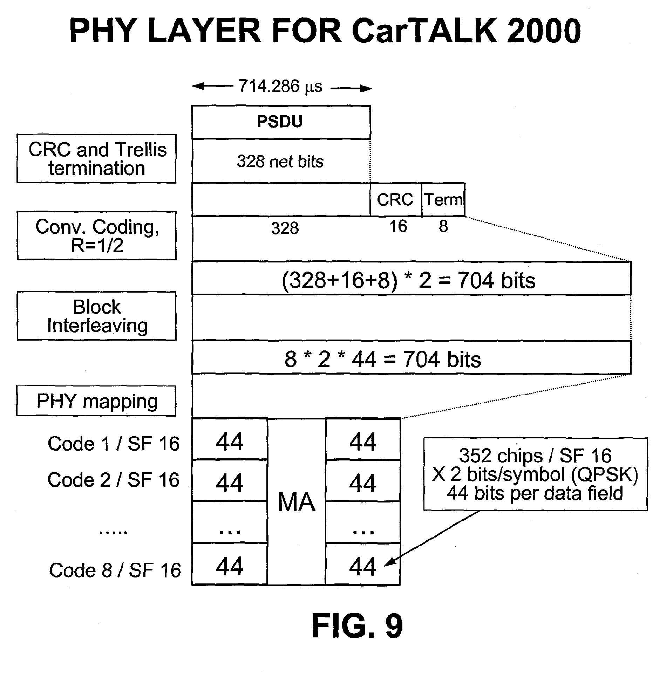

In the UTRA TDD LCR standard, a PHY Service Data Unit (PSDU) is always interleaved and multiplexed over multiple bursts (see 3GPP TS 25.222). To meet the requirement of single burst transmission, the multiplexing of a PSDU is modified. A multiplexing example of a PHY Service Data Unit (PSDU) for UTRA TDD ad hoc is depicted in **fig.9**. Here, a PSDU contains 328 net bits that are protected by 16 bits Cyclic Redundancy Check (CRC-16). Since a convolutional code with a constraint length 9 is used for channel coding, 8 bits are required for Trellis termination (see 3GPP TS25.222). Hence we will use PSDU$_{SIZE}$ = 328 bits in the following analysis. Considering the velocity of the UTRA-TDD-LCR (1.28 Mbit/s), the PSDU is 0.675 ms long. A realistic average number or statistically number of mobile stations per square kilometer is crucial in order to understand the realistic performance of the ADHOC MAC protocol. The proposed algorithm takes into consideration this value with the input parameter **d** = (average numbers of stations) / (cluster area). This value depends on the project, application, scenario, etc. In CarTALK 2000 project, we have used as starting point for the evaluation of parameter **d** some papers in literatura, an internal thesis made in Siemens regarding the city of Milan, and some information provided by DaimlerChrysler AG. Starting from these information, two values are been carried out:

- High density cars (urban scenario): 2600 cars/Km$^2$;
- Low density cars (highway scenario): 105 cars/Km$^2$.

In order to validate the design and the performance of the proposed ADHOC MAC In order to evaluate the ADHOC MAC protocol performances an event driven simulator that reproduces the protocol behaviour has been developed. The simulator allows to evaluate performance of ADHOC MAC protocol in near real conditions. In order to characterise the system, a mathematical model of the protocol has been defined which has been built considering the quantities that should be measured in order to characterise the protocol. The model is described through different kinds of variables, divided in:

- **State variables:** they define completely model status. Theirs evolution describe the system evolution.
- **Input variables:** they are parameters which describe the external solicitations at the system.
- **Output variables:** they are function of state and input variables. They represents quantities to be measured by the system.

Once defined the mathematical model of the system to be analyzed, there are two possible methods to evaluate performances: analytical and simulated methods. Analytical methods involve formulation and solution of equations that bind all the variables, through mathematical methods. Usually analytical solutions are really complex. Simulated solutions, instead, are obtained exploiting calculators. They are interesting because it is easier than analytic solution to implement and is possible to obtain measures of any statistical quantity

A fundamental characteristic of the event driven model consists in that status variables change their values only in discrete time instants. An event is defined as a change in status of the system and it is mainly characterised by the instant of occurrence. The ADHOC MAC mathematical model description avails of:

**Input Variables**

- Terminal Radio cover, transmission distance (terminal and stations are considered synonyms).
- Simulation Region Dimension, length and width.
- Statistical distribution arrival terminals.
- Statistical distribution life time terminal.
- Bi-dimensional statistical distribution position terminals.

## EP 1 562 332 A1

### State Variables

- Number of net terminals.
- Number of Frame Information transmissions request, in the net.

### Output Variables

- Throughput S in the net.
- Offered traffic G in the net.
- Throughput S in radio cover.
- Offered G in radio cover.
- First Scheduling Delay.
- Terminal access collisions frequencies.
- Terminal merging collisions frequencies.
- Terminal successful transmissions frequencies.
- Terminal no access attempt frequencies.
- Terminal relay packet frequencies in broadcast multi-hop transmissions.

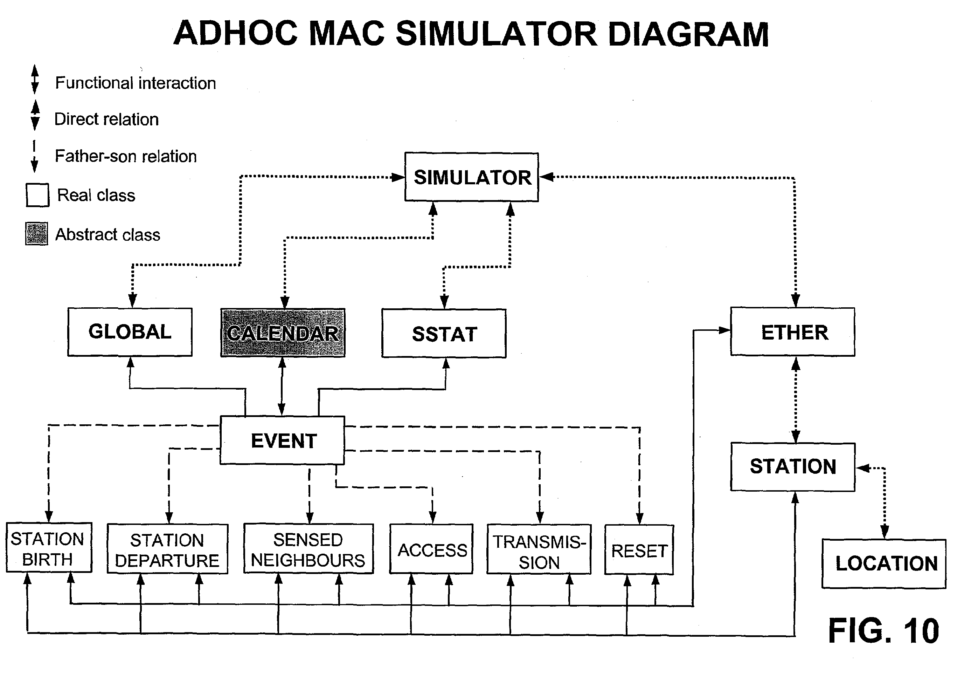

**Fig.10** represents the simulator classes diagram implementation in C++ language. Each block represents an object class implemented in C++. With reference to the figure the following classes are described:

### SIMULATOR class

This class manages the simulator structure and its evolution, mainly it manages:

- **Input parameters,** set at the start of simulation.
- **Statistical counters,** they are updated during the simulation run and they are used to calculate the interest quantities.
- **Input() function,** it's used for asking input parameters value.
- **Init() function,** it initializes the variables and puts the first event in calendar, station arrival at time zero.
- **Run() function,** it runs the simulation.
- **Result() function,** it calculates the statistical values using the statistical counters obtained during the simulation. In particular, for each statistic, it calculates the mean value, confidence interval and confidence interval percentage toward the mean value.

In this block are also comprised functions which allow visualization and memorisation of statistical values, for each run.

### LOCATION class

This class identifies the station position with two attributes:

- **Latitudinal**.
- **Longitudinal**. Each station owns a type location attribute. When a terminal enters the net the system, knowing the statistical location distribution, extracts a variable and assigns it to the station. The station holds this position all his life time.

Having the station coordinates, it is possible to define neighbours. The station neighbourhood is obtained considering terminal comprised in each terminal coverage area.

### STATION class

This class represents the station, its main attributes are:

- **Id,** station identifier, unique in all the net.

- **Lifetime,** station life time.
- **Radio_Cover,** station detection range.
- **Position,** is a LOCATION class, it represents the position terminal in the net.
- **Slot_BCH,** it represents the slot number where the station transmits his Frame Information. If zero, it says that station is just arrived in the net and it must decide yet which slot to access, or the station has transmitted but it has collided with another transmissions.
- **No_sense,** it's used for indicating the phase where the station has decided the access slot but it must wait until the starting slot. In this interval time the station updates his Frame Information, but not his channel vision, that it's represents by status_channel attribute. When the value flag is 0 the station updates also his status channel, instead if it values 1, it updates only the Frame information.
- **Status_channel,** it represents the status channel built with the FIs received from his neighbours in the latest N slots. The attribute is a matrix where each column is referred to a slot (N column) and 2 row:

  - First row is 0 if nobody transmits in to the slot, else 1 if they are transmissions.
  - In the second row there is ID's transmitting station, else the value is 0 if nobody transmits or there are collisions among neighbours.

- **FI,** is the Frame Information transmits into BCH channel, is a matrix where each column is assigned to a slot and for each slot there are 4 row:

  - Busy Status: 1 if the slot is busy with a correct transmission, 0 if the slots there aren't transmissions or there are collisions.
  - **Source Identifier:** If the slot is busy in this row there is the ID's transmitting station. With no transmission or collision the slot is 0.
  - **Priority Field:** priority transmission level who has busied the slot.
  - **PTP service flag:** used to guarantee an efficient point to point transmissions, resolving the exposed terminal problem.

When the station owns his BCH channel or it accesses correctly, in each Frame it transmits his Frame Information. In the simulator this happens giving to the receiving stations the possibility to access to the transmitting station FI attribute. The slot where happens the transmission is indicated in slot_BCH attribute.

- **Neighbour,** it 's a reference to the neighbours' station and so it's possible to access them. This reference is created going to calculate which his neighbours among the net stations are.

**ETHER class**

It represents the net, it contents all existing stations in each instant of simulation. Each station, entering the net, can know its neighbours calculating the distance between the itself and each stations in the net, if the distance is minor than its Radio_cover, then it adds a reference in neighbour attribute.

**SSTAT class**

In this block are implemented all the functions calculating the statistic used in MAC performance analysis. In fact each statistic comes defined as Sstat object and for this object are defined the following functions:

- Mean value.
- Variance.
- Mean Square error.
- Confidence interval.

**GLOBAL block**

In this block are implemented the use global functions, like the functions for generating random variables according different statistical laws.

**EVENT class**

It represents the model state changing, each event is characterized from an occurrence instant and for each one, they define and perform the model modifications and, as a consequence, modification of the simulator. Events are blocks themselves.
The model events are the following:

- Station Birth.
- Station Departure.
- Sensed Neighbours
- Access
- Transmission
- Reset

The events modifications are explained in following.

**CALENDAR class**

It collects all events who must be perform during the simulation, they organize according their occurrence instant. The simulator scrolls this calendar, each event is implemented and at the end it extract it from calendar and it passes to execute the next. Besides:

1. In the simulation starting, it inserts it the first event in calendar, at time 0, and it's a station birth.
2. An event can generate other events in later instants. These events will be inserting in the correct calendar position.

**Events Management**

Each event defined in simulator executes different actions, in particular:

**Station birth**

Defined the time instant t as the occurrence instant, actions executed are:

- Extraction a new station arrival => **Station birth event in calendar.**
- Extraction of station position in the net.
- Extraction of life time station => **Station Departure event in calendar.**
- Assignment of id to the station (as ID it takes the counter global value, ID_STATION, and later it increases it).
- Estimate of station neighbourhood and at these neighbours, the born station is added as neighbour.

**Station Departure**

Defined the time instant t as the occurrence instant, actions executed are:

- Extraction of dying station from neighbour attribute of his neighbour.
- Elimination station from the net.

**Sensed Neighbours**

Defined the time instant t as the occurrence instant, actions executed are:

- If slot_BCH attribute is 0, the station hasn't transmitted if the station senses the transmissions neighbour for the first time, or there wasn't a free slot in the previous frame. If slot_BCH is different from 0, then from the status_channel attribute, the station values if it takes the channel or not. In negative case, if it doesn't get reserved a slot or it lost BCH channel, it puts slot_BCH to 0.
- Matrix FI columns with first row to 1 and the second to 0 indicate a collision in that slot among neighbours station. No having meaning this combination, then it puts it 0 to the first row.

- Matrix status_channel columns with first row to 1 and the second to 0 indicate the fault transmissions because not all neighbour have listened the transmission. No having meaning this combination, then it puts it 0 to the first row.
- If slot_BCH=0 it's in IDLE state because it has attempted the access with failing or it has no attempted the access, in these case:

- Extraction free slot and assignment to the slot_BCH
- If slot_BCH is different to 0:

- Sets no_sense=1.
- Generation senses neighbour at the slot BCH instant time plus a Frame. In this case the station shifts the listen phase => **Sensed Neighbours event in calendar.**
- Generation access to the starting slot BCH => Access event in calendar. Else if slot_BCH is equal to 0 means that all slots are reserved and so it doesn't prove the access.
- Generation senses neighbour at the instant t plus a Frame => **Sensed Neighbours event in calendar.**

Else if slot_BCH is different at 0 it's in BCH state, in fact the transmission has happened with successful and so it reserves the slot, or it already had the slot but there hasn't been merging cluster. In this case:

- Generation senses neighbours at the instant time t plus a Frame => **Sensed Neighbour event in calendar.**
- Generation access slot at starting slot_BCH => **Access event in calendar. Access**

Defined the time instant t as the occurrence instant, actions executed are:

- If no_sense=1 it sets it at 0, so the station can start to build the status channel going to mapping the Frame Information (FIs) received for the next N slot in status channel.
- Matrix FI columns with first row to 1 and the second to 0 indicate a collision in that slot among neighbours station. No having meaning this combination, then it puts it 0 to the first row for transmitting a correct FI.
- The transmitting station puts his identify in neighbours FI. If accessing stations are neighbours and transmitting in the same slot, it puts 0 in receiving FI corresponding the slot and 1 in the first row if there is at least a transmission.
- Generation transmission event at instant time t plus infinitesimal => **Transmission event in calendar.**

**Transmission**

Defined the time instant t as the occurrence instant, actions executed are:

- All transmitting stations verify in each neighbour FI if it's present his ID. In positive case it means that there is no others transmitting neighbours and it copies it his Frame information in the neighbours status channel, as following:

  - If it's present a different ID then there are parallel transmission and it don't write nothing, because is already indicates as the reserved channel.
  - If there is the same ID or 0, in both of rows then it writes ID in the second row and it sets it 1 in first row.

Each station verify the result transmission going to control that every FI received owns his ID, in the next N slots. If at least a FI hasn't his ID then it puts the first row at 1 and the second row at 0.

- Generation reset event at instant time t plus infinitesimal => **Reset event in calendar.**

**Reset**

The transmitting station cancels his Frame information so it can receive, in the next N slots, the transmissions from his neighbours, rebuilding its the FI.

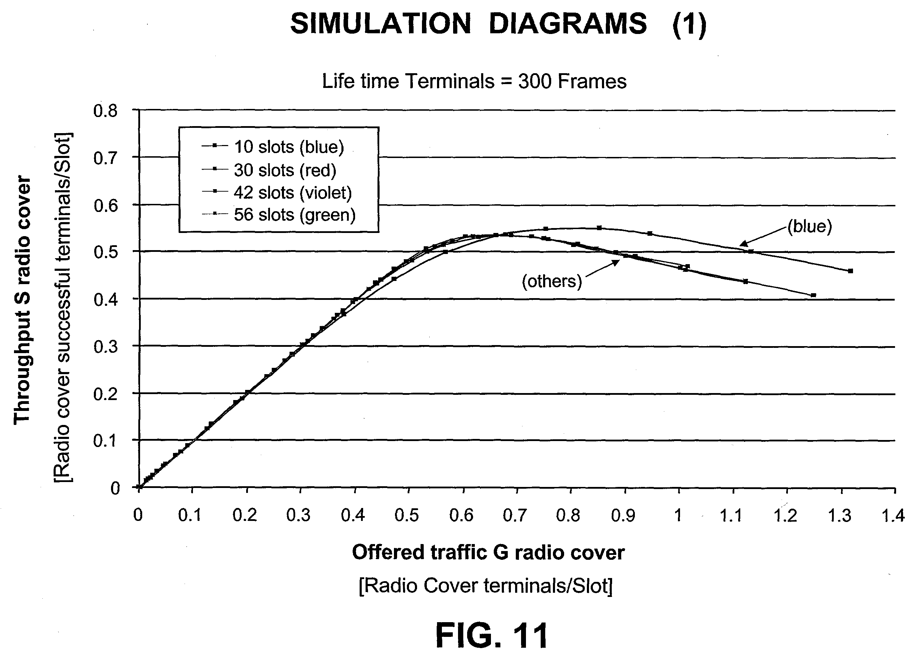

**Fig.11** shows some curves of the throughput S (# of active terminals / # of slots per frame) vs offered traffic curve G (# of terminals / # of slots per frame) within a coverage area, for different frame size (number of slots N). We can observe that with increasing the frame sizes the curves tend to converge towards a limit curve which will considered in the following analysis. The curves at first increase with the load G, reaching a maximum value $S_{max}$ in $G_{max}$, then decrease because of the congestion caused by terminals. We observe also that the maximum throughput (S=1) is never reached and that the curve is *linear up to G= 0.45.* This curve is fundamental in order to determine a point of work target in terms of number of terminals received in the coverage area around each terminal. This point of work has to grant performances as higher as possible and, at the same time, a sufficient margin to congestion and instability. Considering this curve, we have selected G=$\mathbf{G_{PoW}}$=0.45 as value (Point of Work PoW) where we want the system works. A different point of work $\mathbf{G_{PoW}}$ could be selected in **fig.11**; if it is higher the system could become instable and if it is lower the system decreases its performance. We would like to stress that the algorithm proposed can be applied with any different value of G, but the final design and selection strongly depend of the point of work selected. In any case, a power control mechanism has to guarantee that the system works with the value of G around $G_{PoW}$.

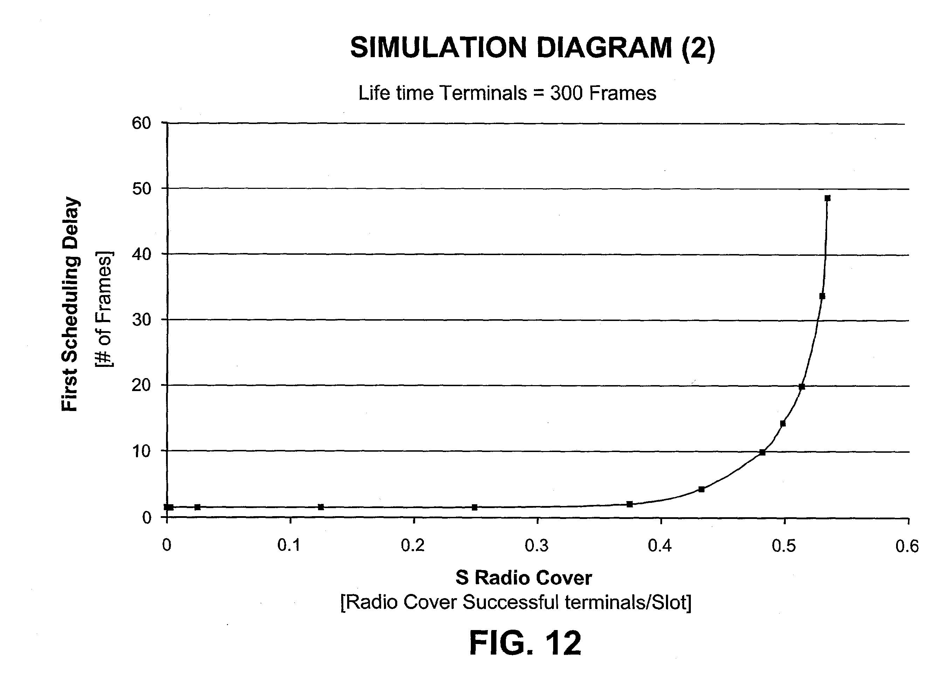

ADHOC MAC protocol requires that a station that wants to communicate with others has to acquire a Basic Channel (BCH) which is used primarily for signalling purposes. **Fig.12** presents the first scheduling delay $T_{SET-UP}$, defined as the average time to set-up a communication channel (in term of frame) vs throughput within a coverage area, as determined by the ADHOC MAC protocol. This value corresponds to the time needed for a station to pass from IDLE to BCH status. The station could switch to Packet Switched Mode (PS) status, where the station has other channels available in addition to the BCH. We will use the hypothesis that $T_{SET-UP}$ would be also the time needed at the station for passing from BCH to PS status. From the curve of **fig.12** we can obtain an estimate of $T_{SET-UP}$ corresponding to the $\mathbf{G_{PoW}}$ selected (symbol # means the number). At $\mathbf{G_{PoW}}$ = 0.45, so S = 0.45 then $T_{SET-UP}$ = 4.3 frames. It is useful to observe also that choices of G grater than $\mathbf{G_{PoW}}$ = 0.45 would result in grater first scheduling delay.

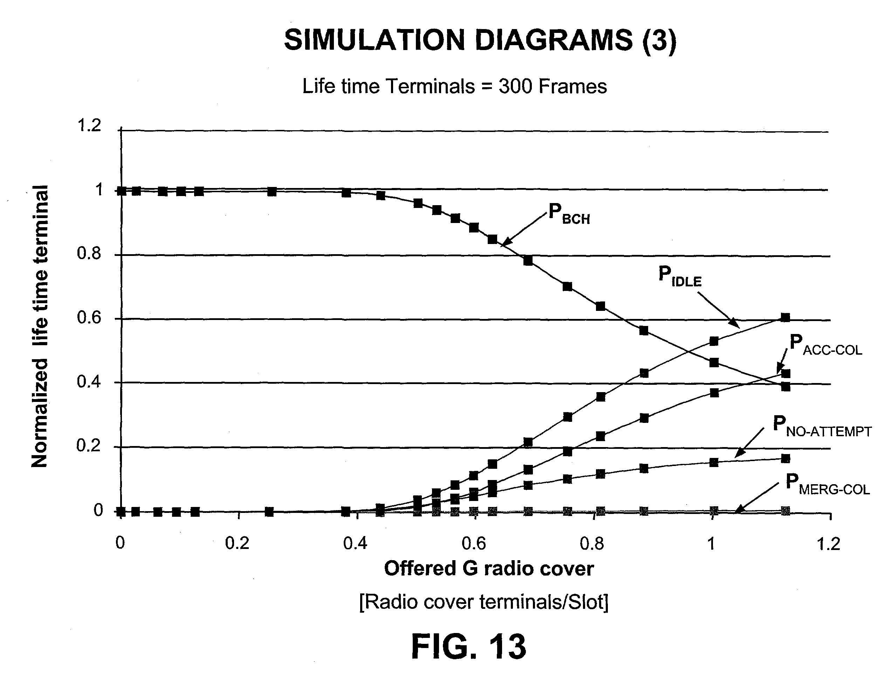

The successive **fig.13** shows the probability $\mathbf{P_{BCH}}$ of each terminal of being in BCH status and the probability $\mathbf{P_{IDLE}}$ of being in IDLE status. $\mathbf{P_{NO-ATTEMPT}}$ represents the probability of the terminals that don't attempt the transmission because they listen the channel completely busy. Also probabilities of collision due at merging cluster $P_{MERG-COL}$ and collisions due at access $P_{ACC-COL}$ have been shown. Obviously:

$$P_{NO-ATTEMPT} + P_{ACC-COL} + P_{MERG-COL} = P_{IDLE} \text{ ; and } P_{BCH} + P_{IDLE} = 1.$$

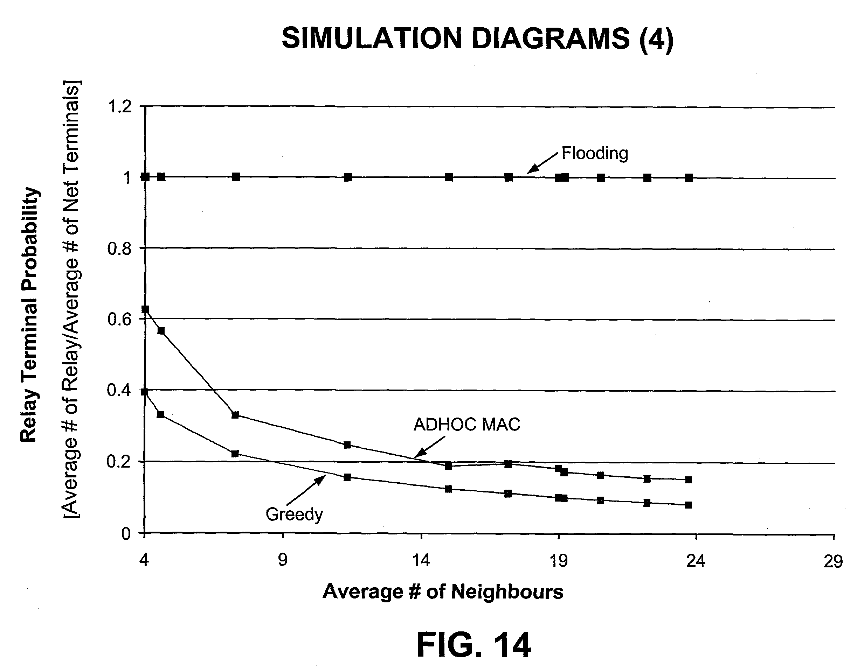

The successive **fig.14** shows the relaying probability, i.e., the average fraction of terminals involved in broadcast relaying, versus the average load G expressed as the average number of neighbours in the terminal coverage area. It clearly shows the positive effect of ADHOC MAC in terms of protocol overhead reduction. When the flooding algorithm is adopted all the terminals in the network relay packets. We note that for a high degree of connectivity, ADHOC MAC provides a gain of 85% in terms of overhead reduction with respect to flooding. The 'greedy' curve represents an ideal situation corresponding to the perfect knowledge of the status of the connections as in the case of a centralized BTS. The greedy curve is important in order to define the optimum degree of connectivity that gives the best broadcast multi hop performances and limit the waste of capacity. In order to optimize the broadcast multi hop capability of the ADHOC MAC corresponding, for example, to a gain at least higher than 80% respect to flooding, the system requires at least 15 neighbours in a square region. As a consequence, considering the $G_{PoW}$ selected in **fig. 14** ($G_{PoW}$ = 0.45) it is possible to find out an estimation of the minimum frame size of the system, $\mathbf{N_{min}}$, which satisfies basic requirements of the protocol. In our specific case, the resulting frame size is $\mathbf{N_{min}} \geq 15/0.45 \geq 33$ time slots. During the following analysis we will not take into consideration mapping with a number of time slots below 33. In addition a number of time slots (so a number of cars per cluster) very low don't make sense in realistic cluster of cars in CarTALK 2000.

As previously said, each terminal periodically transmits the perceived status of slots in the preceding listening period (frame), called Frame Information (FI). Every station reserves a small transmit capacity permanently, resulting in a circuit-switched broadcast connection that is primarily used for signalling purposes. Every station has a fully reserved MAC time slot that contains a MAC service Data Unit (MSDU). In order to take in consideration the physical layer constraints (PSDU), the MSDU has to have a size (**MSDU$_{SIZE}$**) equal to the PSDU or a multiple of the PSDU. It depends of the requirements of the system e.g. on the bit rate of the channel expected. The RR-ALOHA algorithm is based on a protocol overhead which carries information on each of the N time slot of the frame. The information needed for each slot (BITS$_{SLOT}$) is aggregated by each terminal in the so called Frame Information (FI). In order to have the correct working of the ADHOC MAC protocol some information, like busy bit and terminal identification are mandatory. Additional bits could be insert if required of specific applications. In any case the overhead is an assigned number of bits that we have called **FI$_{SIZE}$**. Since FI is an overhead of the protocol we want to minimize it, so FI$_{SIZE}$ as smaller as possible is required and we will use in the optimum mapping analysis. Hence the size of FI could be calculated by the following equation:

$$FI_{SIZE} = BITS_{SLOT} \cdot N \qquad [Bits] \qquad\qquad (1)$$

In order to have the correct working of the ADHOC MAC, the number of slots required for time slot busy and time slot free or in collision are different, because when the time slot is free or in collision only the BUSY bit is needed. Hence the size of FI could be calculated according to the point of work selected, so according to the number of real active terminals per frame. The equation becomes:

$$FI_{SIZE(opt)} = S_{PoW} \cdot N \cdot BITS_{SLOT\_Busy} + (1 - S_{PoW}) \cdot N \cdot BITS_{SLOT\_Free} \qquad \text{[Bits]} \qquad (2)$$

If we want to insert the application data packet (e.g. high priority service) directly into the MAC layer, we have two different possibilities, both with some advantages and disadvantages. The first choice is to insert the application data inside BCH. This solution guarantees to each station in BCH mode an additional application channel fully reserved, with a fixed bit rate and delay but it also results in a large unused capacity if no packets have to be transmitted. Further additional capacity, in terms of time slots, could be reserved as explained in Ref.[1]. With this choice, and using results shown above, it is possible to evaluate the one-hop delay $D_{OH}$ of high priority messages in term of number of frames through the following equation:

$$D_{OH} = P_{IDLE} \cdot T_{SET\text{-}UP} + P_{BCH} \cdot 0.5 + (n\text{-}1) \qquad \text{[\# of frames]} \qquad (3)$$

where 0.5 is the average delay in term of frames of message for the terminal in BCH status and n is the number of frames needed for transmit all application messages that could be higher than the data field inside BCH channel. So n = round up to the next integer of (# of bits of application messages / # of bits of data field inside BCH channel).

$$n = \left\lceil \frac{MSG_{SIZE}}{MSDU_{SIZE} - FI_{SIZE}} \right\rceil \qquad (4a)$$

The second choice is the use of BCH only for signalling purposes, so for each applications every station have to select capacity through the selection of another periodic time slot. This additional capacity is only used as long as packets have to be transmitted and released after successful transmission. The second choice limits the waste of capacity, but we cannot guarantee a channel available and a fixed delay, especially when the number of terminals is very high. In this second case, exploiting results shown above, the one hop delay DOH of high priority messages in term of number of frames is obtained by the following equation:

$$D_{OH} = P_{IDGE} \cdot 2 \cdot T_{SET\text{-}UP} + P_{BCH} \cdot T_{SET\text{-}UP} + (n\text{-}1) \qquad \text{[\# of frames]} \qquad (5)$$

the 2 factor in the first term is needed in order to consider that a terminal in the IDLE have to select two time slot (one for signalling purpose and one for the application message). In this case, n = round up to the next integer of (# of bits of application messages/ # of bits of time slot), because the data field in this case is the whole time slot.

$$n = \left\lceil \frac{MSG_{SIZE}}{MSDU_{SIZE}} \right\rceil \qquad \text{[\# of frames]} \qquad (4b)$$

Thanks to the above expressions for $D_{OH}$, it is possible to put in comparison different mapping configurations taking in consideration both the options described above. **$D_{OH}$** is an important indicator of performances associated with a particular mapping choice for the ADHOC MAC on the selected physical layer. In particular, for different values of G, we can determine which mapping offers the best performance in term of one-hop delay $D_{OH}$ versus coverage radius in relation with the relative application requirement. From (3) and (5) we can determine figures of delay **$D_{OH}$** versus offered traffic **G.** With the hypothesis of fixed traffic density **d** [cars/km$^2$] during the message transmission and considering the following equation:

$$d \cdot \pi \cdot r^2 = G \cdot N \qquad (6a)$$

where **N** is the number of ADHOC MAC slots in the ADHOC MAC frame, r is the coverage radius, we can derive figures of $D_{OH}$ versus coverage radius **r** (one hop) for each different mappings.

The information about one hop delay is really important, but it is also important to consider the multi-hop transmission delay $D_{MH}$. In order to have information about $D_{MH}$ we have used the following hypothesis:

- Power control guarantees constant G = $G_{PoW}$ = 0.45, so one hop delay and radio cover are fixed;
- Relay a broadcast packet only stations in BCH status;
- For the same density of cars **d** exists one station at radio cover distance from the relay of source packets.
  In case of data inside BCH we can determine an estimation of multi-hop delay through the following equation:

$$D_{MH} = D_{OH} + (1.5 + (n-1)) \cdot (\#\_of\_relay) \qquad [\text{# of frames}] \qquad (7)$$

In case of data outside of BCH we can determine the multi-hop delay through the following equation:

$$D_{MH} = D_{OH} + (T_{SET-UP} + (n-1)) \cdot (\#\_of\_relay) \qquad [\text{# of frames}] \qquad (8)$$

where $T_{SET-UP}$ is the time to set up data slot for relay packet. In case of data outside of BCH, at the beginning there is only one source that sends a messages with a cluster size and a coverage radio. From the second hop to the last one, simulation result shown that with high connectivity, the number of terminal that tries to relay the packet increases of 20%. This effect increases the offered traffic G, then the power control decreases the cover radius, so the distance reaches from the second hop to the last one decreases. This effect is like to have the density of terminal increased of 20%. So in order to take into consideration this effect we use the following equation instead of (6a) for the calculation of the radius reached:

$$1.2 \cdot d \cdot \pi \cdot r^2 = G_{PoW} \cdot N \qquad (6b)$$

Thanks to this relation, we can determine figures of $D_{MH}$ versus coverage radius r (multi-hop) for each different mappings. Hence with different values of G, we can determine also which mapping offers the best performance in term of multi-hop delay $D_{MH}$ versus coverage radius in relation with the relative application requirement.

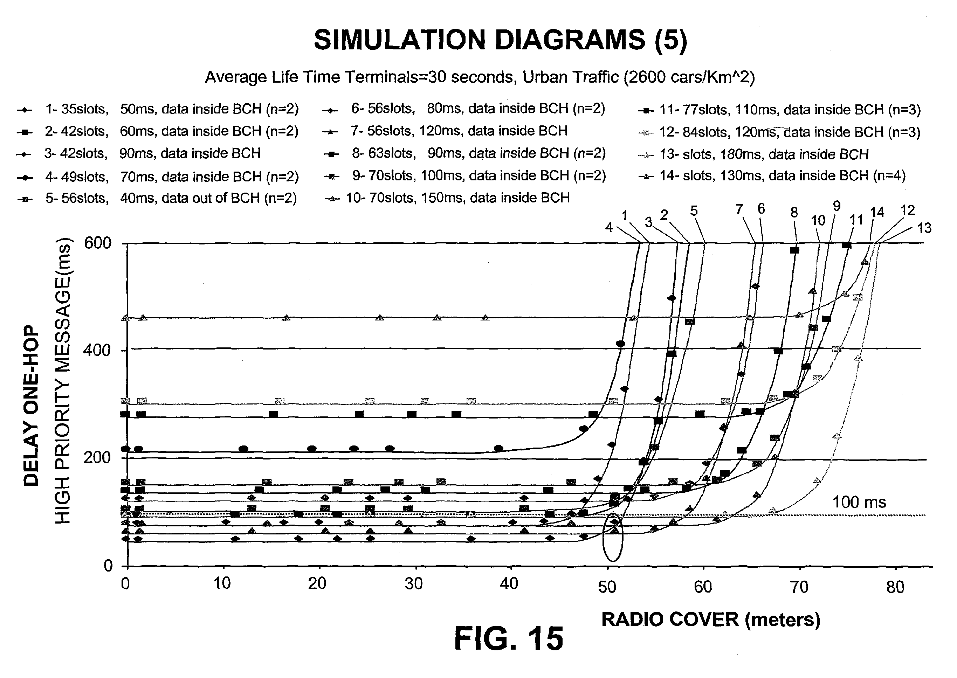

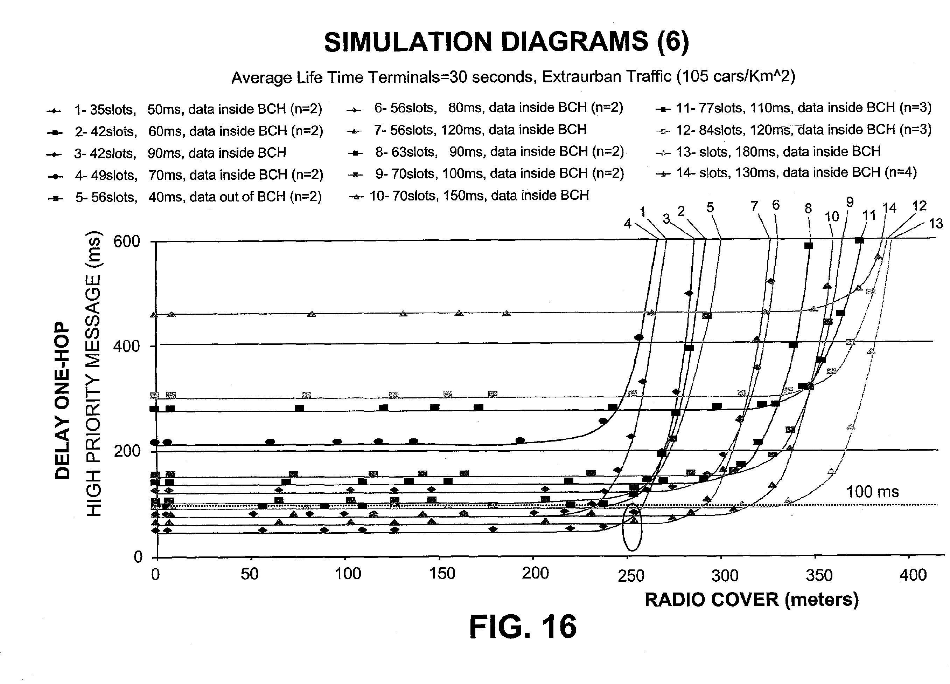

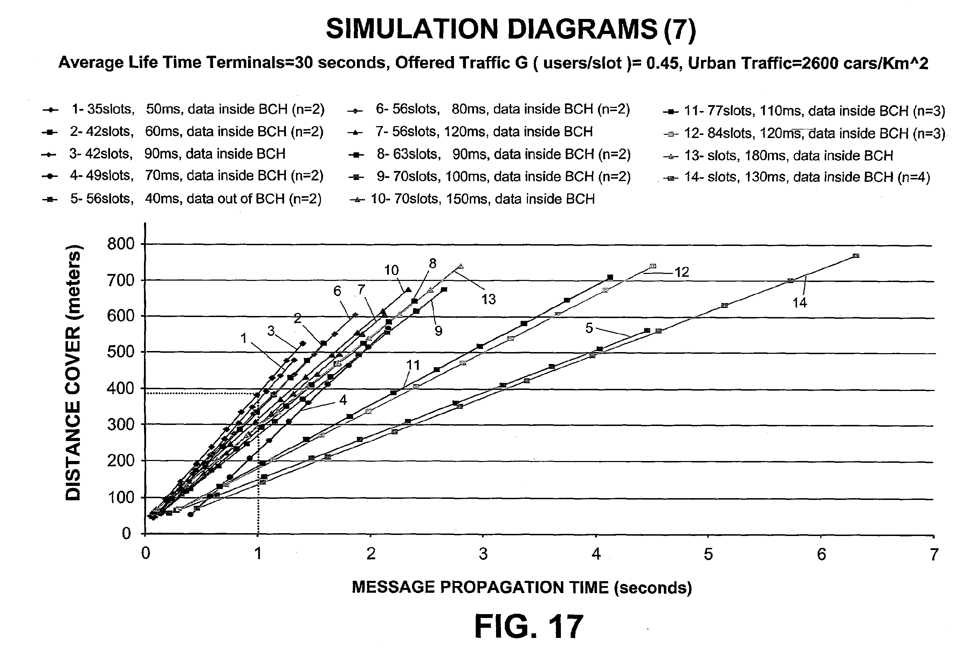

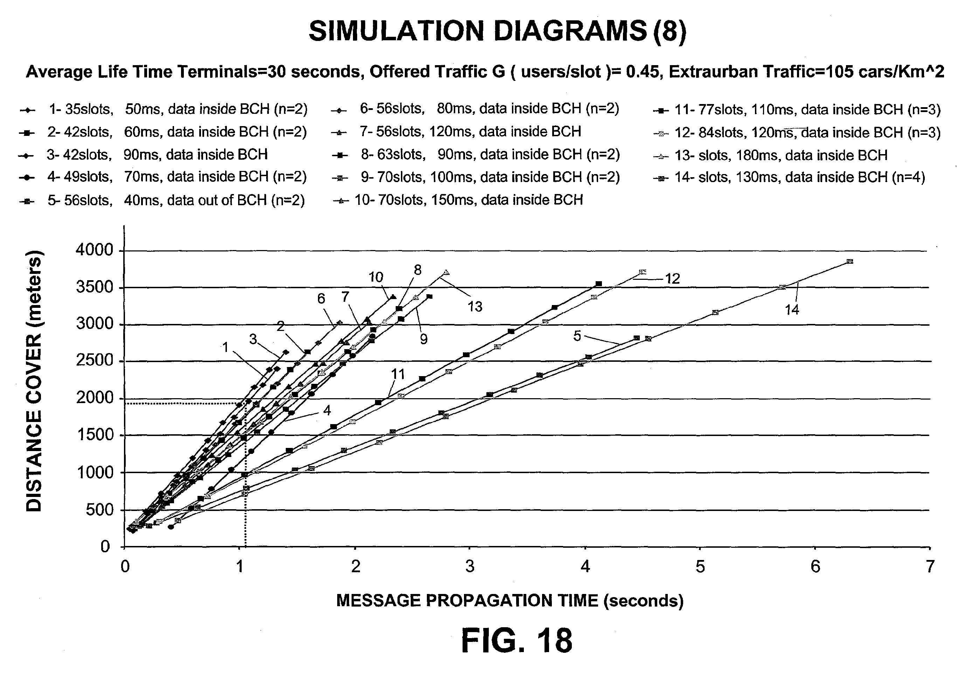

Through the following example, we show how to evaluate the performance of high priority messages in each different case (*Data in/out BCH*) in terms of $D_{OH}$ and $D_{MH}$, in the practical CarTALK 200 case where ADHOC MAC is mapped on UTRA TDD LCR physical layer. From the comparison we show how it is possible to select the best choice for mapping. In our analysis we select the different mappings shown in the following **figures 15** and **16** regarding $D_{OH}$ versus coverage radius **r** (one hop) for each different mappings, respectively referred to the two values of density **d** (Urban or Extraurban). The set of curves of the two figures remain the same with changing **d**, only coverage radii are different. In fact, depending of the traffic situation (stations per square kilometre), it is assumed that an optimized power control algorithm would adapt dynamically the communication range in order to shrink or extend the cluster size maintaining the system on the selected point of work ($G_{PoW}$ = 0.45), that is also a number of active stations in the detection range of one active station. It is worth to stress that the different options (Data inside/outside BCH) are strictly related to the PSDU, because the MSDU has to have a size **($MSDU_{SIZE}$)** equal to the PSDU or a multiple of the PSDU. Considering this constraint of the UTRA-TDD-LCR, and in order to limit the waste of capacity in term of bits, only one possible mapping with data out BCH has been taken in consideration (56 slots per frame, frame duration 40 ms, n=2). From these curves, possible mappings (ADHOC MAC frame duration and data channel configuration) can be easily determined considering the CarTALK2000 constraints that require a one hop delay not higher than 100 ms. The multi-hop delay, determined with the above formulas (6b,7,8) is evaluated for the CarTALK 2000 case, with the same mappings considered in the one hop case. In our analysis we can determine **figures 17** and **18** regarding $D_{MH}$ versus coverage radius **r** (multi-hop) for each different mappings, respectively referred to the two values of density **d** (Urban or Extraurban). The set of curves of the two figures remain the same with changing **d**, only coverage radii are different, because of the optimized power control is assumed. Through the above curves it is possible to determine which mapping offers the best performance in terms of multi hop delay. Comparing the multi-hop performances with the one-hop delay curves it is possible to find out which mapping offers the best performances in terms of one/multi-hop delay. In the CarTALK 2000 the optimum mapping results to be that of curve 3, with 42 slots per frame 90 ms long and data inside the BCH, which gives the better performance for both OH and MH transmissions. More precisely, curve 3 is the one indicating the lower OH delay and the maximum covering distance for the same value of the abscissa. Through the analysis explained above we can select the optimum mapping of ADHOC MAC on the physical layer of the standard selected taking into consideration all constraints posed by physical layer, ADHOC MAC protocol itself and by the application requirements. The procedure considers realistic deployment scenario and is driven by the main requirements that have to be optimized.

After the selection of the optimum mapping and considering the velocity of the physical layer selected, the bit rate at MAC layer can be obtained. The channel inside BCH (if present) has a bit rate obtained by the following equation:

$$MSDU_{SIZE} - FI_{SIZE} / T_{FRAME}.$$

The channel outside and/or additional channel has a bit rate obtained by

$$MSDU_{SIZE} / T_{FRAME}.$$

If we are going to design a system without specific requirements for one-hop or two-hop delay (e.g. internet application) the MAC bit-rate, obtained with the previous equations, could be used as an input parameter for determining the optimum mapping. Considering the previous example, the optimum mapping for the CarTALK 2000 system is that with a frame length of 42 slots and 90 ms duration. Assuming human time of reaction of 1 second, with the selected design, the spread of the broadcast message with multi-hop capability, in 1 second reaches 400 meters and 2 Km in urban and highway scenarios, respectively. Hence, we select this mapping as the optimum for ADHOC MAC on UTRA-TDD-LCR in ADHOC MODE for Inter-Vehicle Communication in CarTALK 2000 project. The MSDU size is fixed to MSDU = 3xPSDU (3 x 328 bits), so every MAC time slot consists of three physical layer time slot of UTRA TDD LCR and the $MSDU_{SIZE}$ = 984 bits. Every active station has a fully reserved time slot or Basic Channel (BCH) of 10.93 kbps (984 bits / 90 ms), that is split into two fields: FI (signalling purpose) and Data (application messages purpose). So the lowest capacity that is permanently reserved for an active station is therefore approx. 10.93 kbps, including protocol overhead. In our analysis in CarTALK 2000 project FI must specify three fields for each slot in the frame

- BUSY bit (1 bit),
- Terminal ID (8 bits),
- QoS (priority) and Broadcast service flags (2 bits).

Hence 11 bits for each time slot busy and 1 bit for each time slot free or in collision are needed. In fact when the time slot is free or in collision only the BUSY bit is needed. As explained above we want that the system, through a good power control, works with G=0.45 (S = $S_{CT}$ = 0.45), so the system has 45% time slots in the frame active and 55% free or in collision. Considering a frame selected of N = $N_{CT}$ = 42 slots the overhead is calculated through the following equation:

$$FI_{SIZE\_CT} = S_{CT} \cdot N_{CT} \cdot 11 + (1 - S_{CT}) \cdot N_{CT} \cdot 1 = 0.45 \cdot 42 \cdot 11 + 0.55 \cdot 42 \cdot 1 = 231 \qquad [bits] \qquad (9)$$

The active station has a data channel into BCH available for the applications with capacity of 8.4 kbps and average one-hop delay of 45 ms. When a user data packet has to be transmitted and the data channel into BCH does not provide enough capacity, an additional channel in term of a periodic time slot could be selected by the station. This additional capacity is approximately 10.93 kb/s (no overhead required in additional channel) and is only used as long as packets have to be transmitted and is released after successful transmission. Since the frame has 42 slots, in the detection range of one station, theoretically up to 42 active stations can be simultaneously served in BCH status. As explained above, in order to have high performance as much as possible but that can guarantee a sufficient margin to congestion and instability, G=0.45 has been selected as value where we want the system works. So the power control manages the cluster size in order to have in the detection range of one station up to 42 x 0.45 = 19 active stations. Each car in BCH status builds its own communication cluster, where it transmits in only one fully reserved time slot and listens to up to N-1 connected users. Depending on the environment (urban, highway...) the density of car can change considerably (e.g. a lot of cars in city centre). So, the optimized power control algorithm must adapt dynamically the communication range in order to shrink or extend the cluster size. The cluster size determines the number of cluster per area. The lower the range, the higher number of clusters and the higher number of connected users. It shall be mentioned that the number of 42 (or 19 stations) is not necessarily the absolute maximum since non active stations may be listened the broadcast messages from the active stations and may try their transmission request in order to reach the BCH status.

BIBLIOGRAPHY

[1]   Italian patent application No. MI2CC3A 000286, filed on 18 February 2003, in the name of POLITECNICO di Milano, titled: "Protocollo di comunicazione per reti ad-hoc".

[2]   Kim, Y., and Nakagawa, M., "R-Aloha Protocol for SS Inter-Vehicle Communication Network Using Head Spacing Information", IEICE Trans. Commun., Vol. E79-B, No 9, (Sept. 1996), 1309-1315.

[3]   L. Wischhof, A. Ebner, H. Rohling, M. Lott, R. Halfmann, "SOTIS - A Self-Organizing Traffic Information System", VTC 2003 Spring.

**Claims**

1. Method for mapping onto TDMA physical layer of existing formats the MAC protocol layer of ad hoc wireless networks of mobile stations communicating among each others on a time channel subdivided into sequential MAC frames including a number N of logical time slots competitively accessed by the mobile stations for broadcasting messages including system information (FI) indicating on the accessed time slot, named basic channel, the busy or free status of the N-1 preceding time slots checked by the station, plus application data either transmitted on the basic channel or another reserved timeslot, **characterized in that** includes the steps of:

a) estimating the fraction of busy time slots versus offered traffic within the coverage area of the stations for selecting a point of work of the network kept constant by power control and nearly corresponding to the maximum value of the linear trend;

b) estimating the delay between transmission and reception of the message versus the distance from the source for possible combinations of MAC frame durations and the relevant number N of logical time slots at the point of work;

c) selecting that combination indicating the maximum distance in correspondence of a fixed application specific delay.

2. The method of claim 1, **characterized in that** said application specific delay is in the order of the human time of reaction at the warning stimulus transmitted with said messages.

3. The method of claim 1, **characterized in that** includes the step of summing up two terms, a first one corresponding to the length of the code associated to the busy status multiplied by the fraction of busy time slots, and the second one corresponding to the length of the code associated to either free or collision status multiplied by the complementary fraction, obtaining the size of system information (FI) into the basic channel.

4. The method of claim 3, **characterized in that** includes the step of calculating the number of frames needed to transmit said application message as the round up to the next integer of the quotient of the division of the application message length by the difference between the length of the time slot and the length of data field inside the basic channel.

5. The method of claim 4, **characterized in that** the delay estimated at step b) expressed as number of MAC frames for one-hop transmissions is obtained by summing up three terms, a first one corresponding to the probability of each stations of being in idle state multiplied by the first scheduling delay, a second one being half the probability of each station being transmitting on basic channel, and the third one being said number of frames needed for transmit the application message minus one.

6. The method of claim 1, **characterized in that** includes the step of calculating the number of frames needed to transmit said application message outside the basic channel as the round up to the next integer of the quotient of the division of the application message length by the length of the basic channel.

7. The method of claim 6, **characterized in that** the delay estimated at step b) expressed as number of MAC frames for one-hop transmissions is obtained by summing up three terms, a first one corresponding to the probability of each stations of being in idle state multiplied by two times the first scheduling delay, a second one being the product of the probability of each station being transmitting on basic channel by the first scheduling delay, and the third one being said number of frames needed for transmit the application message minus one.

8. The method of one of the preceding claim, **characterized in that** the one-hop transmission delay in correspondence of said possible combinations at the estimation step b) are obtainable as a function of the offered traffic G with the hypothesis of fixed traffic density d during the message transmission and then for the distance from the source by further considering the following expression:

$$d \cdot \pi \cdot r^2 = G \cdot N$$

where r is the coverage radius of the one-hop transmission.

9. The method of claim 5, **characterized in that** the delay estimated at step b) as a number of MAC frames for multi-hop transmissions of said application message inside the basic channel is obtained by summing up the one-hop transmission delay with a product of the number of relays by the sum of 1.5 with said number of frames needed to transmit the application message minus one.

10. The method of claim 6, **characterized in that** the delay estimated at step b) as a number of MAC frames for multi-hop transmissions of said application message outside the basic channel is obtained by summing up the one-hop transmission delay with a product of the number of relays by the sum of the first scheduling delay and said number of frames needed to transmit the application message minus one.

11. The method of claim 9 or 10, **characterized in that** the multi-hop transmission delay in correspondence of said possible combinations at the estimation step b) are obtainable as a function of the offered traffic G with the hypothesis of fixed traffic density d during the message transmission and then for the distance from the source by further considering the following expression:

$$1.2 \cdot d \cdot \pi \cdot r^2 = G_{PoW} \cdot N$$

where r is the coverage radius of the one-hop transmission.

12. The method of claim 1, **characterized in that** logical time slot duration are multiple of physical time slot duration of the selected TDMA format.

# UTRA-TDD-LCR PHY LAYER

**10 ms**

| RADIO FRAME |
|:---:|

**5 ms** · **5 ms**

| SUBFRAME | SUBFRAME |
|:---:|:---:|

| Access technique | CDMA + TDMA |
|---|---|
| Chip rate | 1,28 Mchip/s |
| Carrier spacing | 1,6 MHz |
| Frame duration | 10 ms |
| n° slots per Frame | 14 |
| Modulation | QPSK (8 PSK optional) |
| Spreading | 1 to 16 orthogonal codes |

| TS0 | | TS1 | TS2 | TS3 | TS4 | TS5 | TS6 |
|:---:|:---:|:---:|:---:|:---:|:---:|:---:|:---:|

**← 675 µs, 864 chips →**

| Data symbols | Midamble | Data symbols | GP |
|:---:|:---:|:---:|:---:|

**← 275 µs** · **112,5 µs →**
**352 chips** · **144 chips**

## FIG. 1

## ADHOC MAC: CarTALK 2000 APPLICATIONS

Hazard Location

Horizon 3
(250m)

Horizon 2
(500m)

Horizon 1
(1000m)

## FIG. 2

1
2
3

## FIG. 4

ADHOC MAC: CarTALK 2000 APPLICATIONS

FIG. 3

# ADHOC MAC: CarTALK 2000 APPLICATIONS

**FIG. 5**

1. Car-to-car direct
2. Car-to-car via relaying by intermediate cars
3. Car to stationary gateway
4. Car to Internet via stationary gateway

**FIG. 6**

EP 1 562 332 A1

# CarTALK 2000: COMMON MESSAGE FIELDS

| Signal | Units | Fomat | Bytes | Accuracy | Type | Rate (Hz) |
|---|---|---|---|---|---|---|
| | | | | | | |
| Common Message (IWF & CBLC & CODA) | | | 63 | | Cyclic | |
| timeStamp | ms | ASCII | 9 | | Cyclic | 50 |
| vehicleID | - | DWORD | 4 | - | Cyclic | 50 |
| vehicleType | - | ENUM | 1 | - | Cyclic | 50 |
| length | m | FLOAT | 4 | 0.1 | Cyclic | 50 |
| width | m | FLOAT | 4 | 0.1 | Cyclic | 50 |
| positionLatitude | deg | FLOAT | 4 | 0.000001 | Cyclic | 50 |
| positionLongitude | deg | FLOAT | 4 | 0.000001 | Cyclic | 50 |
| positionYaw | deg | FLOAT | 4 | 0.5 | Cyclic | 50 |
| positionAccuracy | m | FLOAT | 4 | - | Cyclic | 50 |
| velocity | m/s | FLOAT | 4 | 0.5 | Cyclic | 50 |
| velocityHeading | deg | FLOAT | 4 | | Cyclic | 50 |
| velocityYaw | deg/s | FLOAT | 4 | 0.5 | Cyclic | 50 |
| acceleration | m/s2 | FLOAT | 4 | 0.5 | Cyclic | 50 |
| laneID | - | ENUM | 1 | - | Cyclic | 50 |
| roadID | - | QWORD | 8 | - | Cyclic | 50 |

**FIG. 7**

EP 1 562 332 A1

# CarTALK 2000: MESSAGE TYPES AND REQUIREMENTS

|  | IWF 1 | IWF 2 | IWF 3 | CBLC1 | CBLC2 | CODA |
|---|---|---|---|---|---|---|
| One-Hop transmission Range [m] | 1000 | 1000 | 1000 | 500 | 500 | 500 |
| Multihop | + | + | + | + | + | - |
| Broadcast | + | + | + | + | + | + |
| Unicast | - | - | - | - | - | + |
| Priority | + | + | + | - | - | + |
| Repetition rate [Hz] | 1-10 | 25-50 | 10 | 10-20 | 20-50 | 20-50 |
| Maximum delay_OH [ms] | 100 | 100 | 100 | 100 | 100 | 100 |
| MessageSize [Byte] | 65 | 65 | 65 | 65 | 65 | 65 |

## FIG. 8

EP 1 562 332 A1

# PHY LAYER FOR CarTALK 2000

← 714.286 µs →

PSDU

CRC and Trellis termination

328 net bits

|  | CRC | Term |
|---|---|---|
| 328 | 16 | 8 |

Conv. Coding, R=1/2

(328+16+8) * 2 = 704 bits

Block Interleaving

8 * 2 * 44 = 704 bits

PHY mapping

Code 1 / SF 16   44 | MA | 44
Code 2 / SF 16   44 | MA | 44
.....            ... |    | ...
Code 8 / SF 16   44 | | 44

352 chips / SF 16
X 2 bits/symbol (QPSK)
44 bits per data field

## FIG. 9

EP 1 562 332 A1

# ADHOC MAC SIMULATOR DIAGRAM

Functional interaction

Direct relation

Father-son relation

Real class

Abstract class

SIMULATOR

GLOBAL

CALENDAR

SSTAT

ETHER

EVENT

STATION BIRTH

STATION DEPARTURE

SENSED NEIGHBOURS

ACCESS

TRANSMIS-SION

RESET

STATION

LOCATION

**FIG. 10**

EP 1 562 332 A1

# SIMULATION  DIAGRAMS  (1)

Life time Terminals = 300 Frames

**Throughput S radio cover**
[Radio cover successful terminals/Slot]

Legend:
- —■— 10 slots (blue)
- —■— 30 slots (red)
- —■— 42 slots (violet)
- —■— 56 slots (green)

(blue)

(others)

**Offered traffic G radio cover**

[Radio Cover terminals/Slot]

# FIG. 11

EP 1 562 332 A1

# SIMULATION DIAGRAM (2)

## Life time Terminals = 300 Frames

**S Radio Cover**
[Radio Cover Successful terminals/Slot]

# FIG. 12

EP 1 562 332 A1

# SIMULATION DIAGRAMS (3)

## Life time Terminals = 300 Frames

**FIG. 13**

EP 1 562 332 A1

# SIMULATION DIAGRAMS (4)

**FIG. 14**

# SIMULATION DIAGRAMS (5)

Average Life Time Terminals=30 seconds, Urban Traffic (2600 cars/Km^2)

- 1- 35slots, 50ms, data inside BCH (n=2)
- 2- 42slots, 60ms, data inside BCH (n=2)
- 3- 42slots, 90ms, data inside BCH
- 4- 49slots, 70ms, data inside BCH (n=2)
- 5- 56slots, 40ms, data out of BCH (n=2)
- 6- 56slots, 80ms, data inside BCH (n=2)
- 7- 56slots, 120ms, data inside BCH
- 8- 63slots, 90ms, data inside BCH (n=2)
- 9- 70slots, 100ms, data inside BCH (n=2)
- 10- 70slots, 150ms, data inside BCH
- 11- 77slots, 110ms, data inside BCH (n=3)
- 12- 84slots, 120ms, data inside BCH (n=3)
- 13- slots, 180ms, data inside BCH
- 14- slots, 130ms, data inside BCH (n=4)

FIG. 15

# SIMULATION DIAGRAMS (6)

Average Life Time Terminals=30 seconds, Extraurban Traffic (105 cars/Km^2)

- 1- 35slots, 50ms, data inside BCH (n=2)
- 2- 42slots, 60ms, data inside BCH (n=2)
- 3- 42slots, 90ms, data inside BCH
- 4- 49slots, 70ms, data inside BCH (n=2)
- 5- 56slots, 40ms, data out of BCH (n=2)
- 6- 56slots, 80ms, data inside BCH (n=2)
- 7- 56slots, 120ms, data inside BCH
- 8- 63slots, 90ms, data inside BCH (n=2)
- 9- 70slots, 100ms, data inside BCH (n=2)
- 10- 70slots, 150ms, data inside BCH
- 11- 77slots, 110ms, data inside BCH (n=3)
- 12- 84slots, 120ms, data inside BCH (n=3)
- 13- slots, 180ms, data inside BCH
- 14- slots, 130ms, data inside BCH (n=4)

**FIG. 16**

EP 1 562 332 A1

# SIMULATION DIAGRAMS (7)

## Average Life Time Terminals=30 seconds, Offered Traffic G ( users/slot )= 0.45, Urban Traffic=2600 cars/Km^2

- 1- 35slots, 50ms, data inside BCH (n=2)
- 2- 42slots, 60ms, data inside BCH (n=2)
- 3- 42slots, 90ms, data inside BCH
- 4- 49slots, 70ms, data inside BCH (n=2)
- 5- 56slots, 40ms, data out of BCH (n=2)

- 6- 56slots, 80ms, data inside BCH (n=2)
- 7- 56slots, 120ms, data inside BCH
- 8- 63slots, 90ms, data inside BCH (n=2)
- 9- 70slots, 100ms, data inside BCH (n=2)
- 10- 70slots, 150ms, data inside BCH

- 11- 77slots, 110ms, data inside BCH (n=3)
- 12- 84slots, 120ms, data inside BCH (n=3)
- 13- slots, 180ms, data inside BCH
- 14- slots, 130ms, data inside BCH (n=4)

FIG. 17

# SIMULATION DIAGRAMS (8)

**Average Life Time Terminals=30 seconds, Offered Traffic G ( users/slot )= 0.45, Extraurban Traffic=105 cars/Km^2**

- 1- 35slots, 50ms, data inside BCH (n=2)
- 2- 42slots, 60ms, data inside BCH (n=2)
- 3- 42slots, 90ms, data inside BCH
- 4- 49slots, 70ms, data inside BCH (n=2)
- 5- 56slots, 40ms, data out of BCH (n=2)
- 6- 56slots, 80ms, data inside BCH (n=2)
- 7- 56slots, 120ms, data inside BCH
- 8- 63slots, 90ms, data inside BCH (n=2)
- 9- 70slots, 100ms, data inside BCH (n=2)
- 10- 70slots, 150ms, data inside BCH
- 11- 77slots, 110ms, data inside BCH (n=3)
- 12- 84slots, 120ms, data inside BCH (n=3)
- 13- slots, 180ms, data inside BCH
- 14- slots, 130ms, data inside BCH (n=4)

**FIG. 18**

EP 1 562 332 A1

# ADHOC MAC: OPTIMUM MAPPING

**L2**

| FI | DATA |
|---|---|
| 231 bits | 753 bits |

◄─────── **MAC FRAME 90ms, 42slots** ───────►

| MSDU #1 | MSDU #2 | - - - - - - - - - · | MSDU #42 |
|---|---|---|---|

984 bits

| PSDU | | |
|---|---|---|

328 bits

**L1**

**CRC and Trellis termination**

| PSDU | CRC | Term |
|---|---|---|
| 328 | 16 | 8 |

**Conv. Coding, R=1/2**

(328+16+8) * 2 = 704 bits

**Block interleaving**

8 * 2 * 44 = 704 bits

**PHY mapping**

| Code 1 / SF 16 | 44 | | 44 |
|---|---|---|---|
| Code 1 / SF 16 | 44 | | 44 |
| .............. | ... | MA | ... |
| Code 1 / SF 16 | 44 | | 44 |

352 chips / SF 16,
X 2 bits/symbol (QPSK)
= 44 bits per data field

# FIG. 19

EP 1 562 332 A1

EP 1 562 332 A1

**European Patent Office**

## EUROPEAN SEARCH REPORT

Application Number

EP 04 42 5067

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | L. COLETTI, C. CSEH, J. TIAN: "CarTALK 2000" ADVANCED DRIVER ASSISTANCE SYSTEMS IN EUROPE, 5 February 2003 (2003-02-05), pages 1-15, XP002295366 PARIS * the whole document * --- | 1 | H04L12/56 B60R16/02 |
| A | F. BORGONOVO, L. CAMPELLI, M. CESANA, L. COLETTI: "MAC for ad-hoc inter-vehicle network: services and performance" IEEE VEHICULAR TECHNOLOGY CONFERENCE 2003, 2003, pages 2789-2793, XP002295367 INTERNET * abstract * --- | 1 | |
| A | EP 1 182 628 A (NOKIA NETWORKS OY) 27 February 2002 (2002-02-27) * paragraph [0001] - paragraph [0016] * * paragraph [0025] * --- | 1 | |
| A | WO 02/27564 A (WIRELESS VALLEY COMMUNICATIONS) 4 April 2002 (2002-04-04) * page 1, line 1 - page 16, line 14 * --- | 1 | TECHNICAL FIELDS SEARCHED (Int.Cl.7) H04L |
| A | US 2002/142782 A1 (BENSKY ALAN ET AL) 3 October 2002 (2002-10-03) * abstract * * paragraph [0001] - paragraph [0010] * * paragraph [0086] * ----- | 1 | |

The present search report has been drawn up for all claims

| Place of search | Date of completion of the search | Examiner |
|---|---|---|
| THE HAGUE | 8 September 2004 | Vaskimo, K |

**ANNEX TO THE EUROPEAN SEARCH REPORT
ON EUROPEAN PATENT APPLICATION NO.**

EP 04 42 5067

This annex lists the patent family members relating to the patent documents cited in  the above-mentioned European search report.
The members are as contained in the European Patent Office EDP file on
The European Patent Office is in no way liable for these particulars which are merely  given for the purpose of information.

08-09-2004

| Patent document cited in search report | | Publication date | Patent family member(s) | | Publication date |
|---|---|---|---|---|---|
| EP 1182628 | A | 27-02-2002 | GB | 2368491 A | 01-05-2002 |
| | | | EP | 1182628 A2 | 27-02-2002 |
| | | | US | 2002049056 A1 | 25-04-2002 |
| WO 0227564 | A | 04-04-2002 | AU | 9114801 A | 08-04-2002 |
| | | | BR | 0114232 A | 20-07-2004 |
| | | | CA | 2423157 A1 | 04-04-2002 |
| | | | EP | 1328881 A1 | 23-07-2003 |
| | | | WO | 0227564 A1 | 04-04-2002 |
| US 2002142782 | A1 | 03-10-2002 | EP | 1362440 A1 | 19-11-2003 |
| | | | WO | 02058290 A1 | 25-07-2002 |

EPO FORM P0459

For more details about this annex : see Official Journal of the European Patent Office, No. 12/82